# EUROPEAN PATENT SPECIFICATION

(11) **EP 2 756 139 B1**
(45) Date of publication and mention of the grant of the patent: **01.02.2017**
(21) Application number: 12777844.7
(22) Date of filing: 13.09.2012
(51) Int. Cl.: E04B 1/76, B25B 31/00, F16B 13/00, F16B 13/14

(54) **ANCHOR ASSEMBLY OF THERMALLY INSULATING BUILDING CONTACT AND CONTACTLESS SYSTEM AND MOUNTING JIG AND INSTALLATION TOOL FOR ADJUSTMENT OF ANCHOR ASSEMBLY**
ANKERANORDNUNG FÜR EINEN KONTAKT ZUM AUFBAUEN EINER WÄRMEISOLATION SOWIE KONTAKTLOSES SYSTEM MIT MONTAGEVORRICHTUNG UND INSTALLATIONSWERKZEUG FÜR DIE ANKERANORDNUNG
ENSEMBLE D'ANCRAGE DE SYSTÈME D'ISOLATION THERMIQUE DE BÂTIMENT AVEC ET SANS CONTACT, ET GABARIT DE MONTAGE ET OUTIL DE POSE POUR L'AJUSTAGE DUDIT ENSEMBLE D'ANCRAGE

(30) Priority: 13.09.2011 CZ 20110566
(43) Date of publication of application: 23.07.2014
(73) Proprietor: ECORAW.CZ s.r.o., 783 25 Bouzov (CZ)
(72) Inventor: MÍCEK, Ivan, 036 01 Martin (SK)
(74) Representative: Smrckova, Marie
(86) International application number: PCT/CZ2012/000091
(87) International publication number: WO 2013/037332

(56) References cited:
- EP-A2- 2 006 461
- EP-A2- 2 213 888
- CZ-U1- 22 586
- DE-A1-102006 021 513
- DE-A1-102009 059 204
- DE-U1- 29 617 495

## Description

### Technical Field

The invention concerns the anchoring assembly for thermally insulating building contact and contactless system, which includes the building structure and the building insulation, between which there is an air gap in the contactless system, in which gluing targets are formed, and it also includes the anchor made of a netting of metallic or non-metallic material, and is formed in the form of a tubular coil or spiral. The anchor is inserted into the anchoring hole from the external side of the building insulation and through the building insulation up to the building structure, and then the anchor in the anchoring hole is filled with an expansion filling material.

The invention also concerns the mounting jig for adjustment of the anchor assembly.

The invention also concerns the installation tool for adjustment of the anchor assembly.

### Background of the Invention

The technical solution concerns especially safe anchoring of thermally insulating layers of varied composition without or with the air gap between the layers and the building structure. The building structure can be formed from a wide scale of the building materials as well as a combination of such materials, which can be separated with air gaps.

Nowadays, nearly exclusively plastic dowels and/or plastic dowels with metal reinforcement pin are used for anchoring thermally insulating systems into the structure. The disadvantage of these dowels is, among other things, that they create undesired thermal bridges. Thermal bridges are even more important in case of disc dowels with a reinforcement steel pin. The new generation of disc anchors/dowels already eliminates the creation of thermal bridges; however at the expense of higher prices and higher labour demands during the installation.

The disadvantage of disc dowels of a varied type is also the fact that the insulating material, through which the cylindrical part of the dowel goes, is not firmly connected with the dowel, it cases the possibility of vibrations of thermally-insulating layers by the impact of wind, even if the layers are not in certain parts of the building structure and/or its bigger surface firmly connected with the building structure by gluing. Whereas this loss of cohesion of the thermally insulating system can result from various reasons: by failure to comply with the technological discipline, by the application of poor quality glues in violation of the applicable standards or by the change of the conditions of the surface of the building structure, for example humidity. This situation can become crucial in case of conditions, which precede the destruction of the insulating layers due to the aforesaid reasons. Even this shortcoming is partially eliminated by the last generation of disc dowels with the use of different modifications. However, it is at the expense of higher costs and higher labour demands during the installation.

A serious shortcoming of disc anchors is the inability of the dowels to achieve the required strength of anchoring. In practice it is not possible to count, as a default, with homogeneity of the surface of the building structure, into which the thermal insulation shall be anchored. Depending on the nature of the material, of which it is made, joints, cracks, cavities, etc. can appear in it.

An example can be a bricked wall or the use of hollow shaped bricks. In these cases, it is not possible to count on the correct function of the anchor. It is not possible to estimate exactly either what is the number of such non-functioning anchors in the system to ensure safety of the anchoring, because drilling of the anchoring holes takes place after gluing the insulating material on the building structure and, therefore, it is realized virtually at random.

Disc anchors, which are used when anchoring the thermally insulating layers, are only designed for stress by the force of wind, which causes underpressure, which tries to pull away (tear away) the insulating material from the building structure primarily with forces that are vertical to the building structure. These anchors are not able to transfer the forces in bend, shear or combined stress. The applicable standards and regulations describe and determine the role of disc anchors as a way of additional anchoring of thermal insulations. Additional in the sense that the main role in creating the hold-down force between the building structure and the insulating material is taken over exclusively by the glue applied on the insulating material and located on the building structure. In case of any loss of the cohesion of the glue with the building structure, it is not possible to count on the disc dowel taking over the task of holding the thermally insulating layers on the building structure.

The destruction of the thermally insulating layers, which tend to occur, is caused primarily by the loss of cohesion of the gluing layer with the building structure. These cases absolutely prevail over the cases when the destruction occurs by tear-off of the insulating material from the glue due to the effect of forces caused by wind.

The current known solutions of chemical anchors are based on a similar or equal principle of the chemical anchor with various modifications of shapes of bodies of anchors. However, all solutions of this type use the reinforcement steel item of a varied shape and place as the load-bearing item: However, in case of anchoring thermally insulating systems, the use of reinforcement steel and also other items slid into the anchor itself is undesired because it results in the creation of unsuitable thermal bridges. Another considerable disadvantage for the use of these anchors in the area of thermally insulating but also other systems is the time demand for their installation and their rather high price. For example, the anchor itself consists of an external grip and/or case, into which the liquid mass, mainly a two-component one, which can flow also into the cavities of the building structure, is dosed. After inserting the load-bearing reinforcement anchoring, primarily a steel item, the liquid filling hardens. Such created connection usually features high strength, which often exceeds the strength of the building structure.

The disadvantage of disc anchors is the creation of thermal bridges. If it is necessary to avoid the occurrence of the creation of thermal bridges, the head of the disc anchor shall be embedded into the insulating material. Technically, this matter is solved by the creation of a recess into the insulating material and the consequent application of the anchor so that the head of the disc anchor rests on the bottom of the recess. Consequently the space, which was formed above the head of the disc anchor is sealed by gluing a ring or a place of the insulating material of the relevant thickness, so that it does not exceed the external size of the anchored insulating material. This solution increases the labour demands of the creation of the anchoring connection; it represents a time loss and can violate the strength of the insulating layer.

DE 29 617 495 U1 corresponding with CZ 290 305 B6, priority 13. 09. 1996 CZ, of the owner ECORAW, s.r.o., SK, called "The spacer" describes the spacer for building purposes, which consists of at least one tubular element, made in the shape of the roll, with eyes or perforations, filled with filling mass inside and outside of the tubular element. It is advantageous to have foamed plastic material as the filling mass. In preferred modification the filling material a foamed plastic, preferably based on polyurethane, and for some purposes there are preferred even usual building materials either individually or in combination of plaster, cement, sand, lime, pearlite, adhesives and binding agents.Tubular elements of various diameters can be stored one in another. The tubular element can be made of the metal mesh or perforated solid plastic material. Inside the tubular element and in the filing material there is inserted reinforcing element. Or, at one or both ends thereof is inserted a fastening element for fixing on e.g. plasterboard wall. The tubular element can have an installation element inside on one or both ends. If required, a reinforcement element can be inserted into the tubular element.

DE 29 617 495 U1 discloses all the features of the preamble of claims 1 and 2.

The advantage of this spacer is that it enables, in a relatively simple way of anchoring, fixation and connection of all building materials. The spacer anchors along the whole periphery of the hole, passing between the connected materials, and then this anchoring is more efficient than the anchoring known till now by means of spacers with heads. These spacers, when applied for suspension of items of medium weight by means of an inserted element, require that the PE dowels in the spacer shall be filled with foam so that it enables screwing of the screws. This spacer has a relatively small ability to increase its strength properties in a simple and non-complicated way, specifically by winding a bigger number of rolls into the roll. The layers of the rolls in contact limit the ability of the foam to expand in the direction of the walls of the anchoring hole. It decreases the size of the anchoring strength. This anchor is able to transfer the load safely only up to a certain limit.

The disadvantage of this solution is that tight winding of layers of the roll, which are in contact along the whole length of the roll, can close the expanding foam inside the roll and the foam does not reach the anchoring hole through the roll. It results in decreasing the anchoring strengths of the connection. The expanding foam, the penetration of which in the direction from the longitudinal axis of the roll through the individual layers of the roll to the wall of the anchoring hole is limited, could push the anchor with a stronger pressure on the rear side of the anchoring hole from the said hole in the direction out of the hole. With respect to this spacer with tight winding of the roll, a small overlap is enough and the expansion in this place of the circumference of the anchor is considerably lower.

In case of application of the spacer for a multi-layer connection, e.g. connection in the insulating composite or between the insulation and the wall etc., which features big weight, the strength properties of this spacer can be insufficient. Big weight of the anchored composite, e.g. with the air gap between the insulation and the structure, helps the spacer not only with clean shear but also with a combined stress bending - shear - or, as the case may be, tensile force. The necessity to increase the strength parameters of these spacers is based on increasing the thickness of the insulating composite and also additional anchoring of the insulating composite on already insulated objects. The length of the spacer in this case, which is loaded with the said combination of the strength load, is increased by approximately 100 % of the length of the spacer, which exceeds the hole in the building structure. Furthermore, it represents an enormous increase of weight of the anchored insulating composite. It requires increasing the strength properties of the spacer, which cannot be ensured by increasing the diameter of the spacer, because it causes a huge time and financial loss during the installation. Increasing the strength properties cannot be realized even by increasing the number of layers of the roll of the spacer being in contact, because it decreases the penetration ability for the filling mass - foam. Another possibility of increasing strength properties is the application of the reinforcement metal element in the longitudinal axis of the anchor, which is a common and very often used way. However, each such reinforcement metal element is an undesired thermal bridge.

An improvement of this spacer of this solution is represented by EP 2 558 735 B1, priority 16. 4. 2010 CZ, of the proprietor ECORAW s.r.o., SK, with title "Expansion Fixing". The spiral expansion fixing contains a metal or plastic material facilitating permanent deformation, with eyes or holes, wound around the longitudinal axis into a helix with at least one terminal coil. The start of the coil is situated either predominantly directly in the longitudinal axis or is parallel to it, and is equipped with a inner ridge in the direction opposite to that in which the coil is led further. The end of the coil or last coil of the helix is situated predominantly on the outer envelope or creates partly or completely the outer envelope of the expansion fixing of this material.

The helix is filled inside and out by a filling substance. The filling mass inside and outside the coils and also between them is a foamed plastic, advantageously foamed polyurethane foam and/or at least one material from the group including plaster, cement, sand, lime, glue, binding agent and suitable minerals, or, as the case may be, liquid, powder and plastic mortar mixtures, with a suitable additive, i.e. with a foaming agent contributing to increasing the volume and decreasing weight of such mineral materials. The filling mass advantageously creates gluing targets outside of the spiral. On the outer end, the spiral can be developed into the armouring part. In the vertical cross-section, the spiral can have circular, oval, triangular or multi-angle shaped coils.

This expansion fixing has very good mechanical properties, e.g. strength, which are achieved by multiple coiling of the applicable material, when the expansion ability of the filling mass remains, in fact, unlimited between individual layers of the spiral. Increasing strength can be applied by means of the reinforcement element, which is the inner comb at the beginning of the coil of the spiral. However, this reinforcement element as the actual part of the spiral of the expansion fixing causes a problem in practice during the application of the foamed plastic by the application tools, e.g. plastic hoses. When woven steel netting is used for the production of this expansion fixing, as the most frequently used material, problems commonly occur while inserting the hose up to the bottom of the anchoring hole while inserting the application hoses into the anchoring hole through the hole in the expansion fixing. The face of the hose catches sharp edges of the reinforcement comb in the expansion fixing consisting of many sharp ends of steel wires used during the production of the steel netting. Therefore, during gradual inserting and removal of the application hose, it can be cut by the sharp edges of the reinforcement comb. In case of other materials used for the spiral of the expansion fixing, this phenomenon does not occur and then this expansion fixing can be applied in many ways, especially in cases when it concerns a expansion fixing with a bigger diameter, over 20 mm. These dimensions are usually less searched for and used for the application of anchoring of the thermally insulating systems. This anchor with inner ridge of coil is suitable for hand-operated production.

Further improvement of this expansion fixing represents solution according EP 2 699 812 A1,priority 18. 4. 2011 CZ, of proprietor ECORAW.CZ s.r.o., CZ with title "Anchor for thermally insulating building systems and method of anchoring thereof in thermally insulating building systems." Anchor with the spatially coiled spiral is equipped with coil, of which beginning and end of the coil are without any part or surface, which would be deflected in any other direction from the continuous lead of the spiral. The anchor is made as a self-supporting structural element in the thermally insulating building systems without other inserted compact reinforcement items, whether internal or external. The anchor with an expansion filling material, which is filling in the area between the spatially arranged and not mutually contacting threads, between eyes, holes or perforations of the material, and creating out of the spirals gluing targets.

In the optimum layout, the anchor has the biggest outer diameter of the coil of the spiral 30 mm and the smallest inner diameter 4 mm, and where the distance between individual coils of the spatially coiled spiral equals to the average size of the eye or perforations of the material in case of the outer diameter of the spirals up to 20 mm, and equals 1.5- to 2-fold of the average size of the eye or perforation of the material, or, as the case may be, diameter of the hole in the perforated semi-product in case of the outer diameter of the spirals over 20 mm.

The main advantage of this invention is that the anchor, made as a self-supporting structural element, does not require any another inserted reinforcement compact items, e.g. a screw or a pin, which cause the creation of undesired thermal bridges and considerably increase the price of the anchor, its weight and also increase the time and price of the installation. When the beginning and the end of the coil have no part or area, the tangent of which would be directed from the connected continuation of the coil towards the longitudinal axis of the spiral or from it, the anchor has no part complicating the production or the installation, e.g. in the form of a comb, rounding or chamfering of the end edge, which is suitable for manual production. The anchor pursuant to this invention can be manufactured easily in the continuous way, which is highly efficient in case of the mass production and it is not based on the classic winding-up. In case of multiple spatial coiling of the spiral of the anchor with coils separated from one another in a nearly equidistant way, the anchor has very good ability to be penetrated by the filling mass between the coils through the holes or perforations of the material, and inside and outside of the spiral in the direction to the anchoring hole, which finally results in the creation of a reliable anchoring connection, with the required strength, with given parameters of distances of individual layers of coils of the spiral and its diameters, which were identified on the basis of long-term tests and verifications. The price of this anchor on the rolling mill can be up to 4x cheaper than the classic winding of the material with a comb on the inner beginning of the spiral.

This invention also deals with the way of anchoring of the anchor pursuant to this invention. The nature of the way of anchoring of this anchor in thermally insulating building systems pursuant to this invention consists in the fact that the spiral and the filling mass penetrating outside and inside through this spiral, between its coils and through its eyes, holes or perforation of the material, creates a self-supporting structural element, which fills the anchoring hole in thermally insulating building systems. It is advantageous when the depth of inserting of the anchor into the anchoring hole in the building structure corresponds to the 2- to 10-fold of the diameter of the anchor, not more than 150 mm, pursuant to the conditions and the thickness of the building structure. If the required inserting of the anchor into the building structure is complied with, the anchoring in the building structure is safe in this way. If this depth of inserting of the anchor into the building structure is not complied with, the anchoring strength is decreased. At the same time, it is advantageous when the depth of inserting of the anchor into the anchoring hole in the building insulation shall be at least to the depth of 2/3 of the building insulation, however not less than 50 mm. If the required inserting of the anchor into the building insulation is complied with, the anchoring in the building insulation is safe in this way. If this depth of inserting of the anchor into the building insulation is not complied with, then in certain cases the required hold-down forces are not achieved.

During long-term experiments in semi-operation and operation conditions it was found, that this type of anchor does not meet with requirements of holding-down ability for high stressed anchoring in thermally building insulating systems and for bigger thicknesses of the building insulations, which are used in the last time.

These discussed solutions, according DE 29 617 495 U1, EP 2 558 735 B1, EP 2 699 812 A1 are corresponding to the products of company ECORAW, applicant of this invention. These products had and have the using during installation and anchoring in thermally insulating building systems. All these products are suitable for anchoring in the polystyrene insulation, possibly in PIR boards. All these products are applicable to different situations, where their specific characteristics are required, as low cost, ease of production, installation and where appropriate service. The DE 29 617 495 U1, EP 2 558 735 B1, EP 2 699 812 A1 and their corresponding products
there are the results of long-standing development of company ECORAW and reflecting of new requirements for their anchoring in the thermally insulating building system.

The common disadvantage of these anchoring elements is inability anchoring of mineral wool insulation and other insulators with low strength, with exception of polysterene. Mineral wool is used for several years. Nevertheless, in the last time, specific density and strength of the insulation boards of mineral wool is declining steadily. Important factor there is, that the weight of the insulation boards, in spite of decreasing the specific gravity, is relatively high, and their strength decreases. In the case of wet mineral insulation, the situation will get worse, because their weight increases and strength decreases.

DE 10 2006 021 513 A1, prioirity 4. 5. 2006 DE, of applicant Deutsche Amphibolin-Werke von Robert Murjahn Stiftung & CO KG, DE with title "Method for fixing of laminar element, e.g. insulation sheet on flat bearing and also a dowel and foam device and device of pressure gas to execution of method". Shaft of dowel has three sections with three different diameters. The first section with the widest diameter is followed to α-second section with a smaller diameter. A transition region of shaft shoulder respectively a recessing item is formed as conical part, in the middle of shaft between its first and the second section. End of second section of shaft is equipped by the first openings and the following narrowest section of shaft is equipped by the second openings. Thus, the shaft has openings with an opening cross-section suitable for foaming mass in its cladding in an area, which protrudes out over laminar element. The foaming mass is injected from outside through the first openings into cavity of dowel under pressure, in such manner, that foaming mass partly arrives into free spaces in building structure through the second openings, or into intermediate area between building structure the and insulation sheet. As main advantage is mentioned, that outside of dowel in area between the insulating plate and the building structure is formed an adhesive layer from a foam, wherein the dowel prevents unwanted displacement of insulation sheet against the building structure during foaming. The conical recessing item is situated during anchorage and after anchorage at the middle of the insulation sheet.

As disadvantage can be assumed a difficult use of the said dowel, and an inability to estimate the anchoring forces, induced by expansion of foam , which penetrates into the holes of the building construction and into intermediate area between insulation sheet and building structure. It is probably difficult to achieve a precisely determined thickness of the gap between the insulation sheet and the building structure, to achieving a uniform flow through the foam through the first and the second openings into the building structure and thereby to achieving the same adhesive area for anchoring forces at each anchoring place. Characteristic load of dowel is determined by size of the anchoring force which are able to ensure an anchorage in building structure. This is the most important feature for designers and is determined its minimum value. In this case anchorage, due to different filling of cavities in the building structure by foam is possible to assume a great *variability* of the values, which are reached by anchoring forces at individual places. Conical recessing lement is situated during foaming and after anchoring in the middle of insulating boards.

EP 2 006 461 A2, priority 20. 6. 2007 DE, of applicant FISCHWERKE Gmbh & Co. KG, DE of title "Method of fixing a heat insulation plate to a construction surface within a fixing element", describes the unit having an anchoring region, which extends over part of length of the unit and serves for the anchorage of the unit in building surface. The anchoring region is formed as an expansion bolt. A fastening region extends over another part of length of the unit as the anchoring region, and serves for the fastening of the heat-insulation plate at the unit, where the circumference of the fastening region is greater than anchoring region. The fastening region comprises a side delivery opening for an adhesive. Between the anchoring region and the fastening region of smaller diameter is situated transition region respective a conical part forming as a recessing item. The conical recessing item is situated during anchorage at the end of the heat insulation plate facing the building surface.

The anchor hole is drilled through the insulation layer, through the adhesive cement layer into the construction. Subsequently, the anchoring element pressed into the anchoring hole so, that the anchoring part has been placed in the building structure. Fastening portion remains embedded in the insulation construction. The conical part enables insertion of the anchoring element through the pre-drilled hole in the insulation, wherein the conical portion after insertion is located immediately before the cement adhesive layer between insulation and building structures. Subsequently, the anchors into the holes introduce adhesive. The anchor portion and the fixing portion are provided with openings for penetration of the adhesive/foam.

As an advantage it is mentioned, that the conical part is not provided with openings and thus prevent leakage of adhesive layer between the insulating plate and the building structure. This can be a disadvantage, e.g. during remediation it may cause a inconsistency of adhesive layer between insulation board and building structure, and a required coherence would be appropriate to restore e.g. using by gluing targets from foam in the created gaps by using foaming through the holes, which are not in this place.

A common feature of both previous solutions of anchors is, that anchors contain the anchoring section and a fastening section with different diameters. Between the fastening and the anchoring section is situated conical portion narrowing from a larger diameter of fastening section towards to the anchoring section of smaller diameter. The conical portion is situated in the middle of the anchoring element, and during and after the anchoring is placed either in the middle or insulation plate on its end facing to the building structure. From the constructional point of view this conical portion is arranged such, that has a function of recessing element and allows easy penetration of the anchor into the insulation with minimum damage of insulation. But, this conical part, in any case does not extend above the fixing section of body diameter/cross section and thus does not contribute a sufficiently increasing of the anchoring strength of the anchor. Further, smaller diameter/cross section of fastening part at both anchor can reduce or limit their use, e.g. for less loading and less mechanically strength materials such as aerated concrete, and also alternatively the masonry structures, where it is likely, that anchor hole the drilled in the gap between the bricks, and the anchoring connection will not perform its function because anchor strength could be small. The large cross-section of fastening part may be also designed for mounting reasons to allow the hose with foam for foaming of anchors., The conical part of both anchors is not provided with openings for foaming. Openings for foaming is not also the fastening portion of the anchor DE 10 2006 60 021 513.

### Summary of the Invention

The said disadvantages are eliminated or considerably limited for the anchoring assembly pursuant to this invention.

Subject matter of the independent Claim 1 of the presented invention consist in the fact, that the body of said self-supporting anchor without inner reinforcement pins, is equipped with at least one screwing item having screwing blades comprising at least one cutting edge or at least one cutting surface for the creation of an efficient screwing surface formed by a sum of projections of screwing surfaces to a plane orthogonal to the longitudinal axis of the body. Said screwing item is situated on one end or end part of said body facing towards the outer surface of said building insulation and extends towards the outside of said body, and wherein the external maximum diameter of said screwing item, is always bigger than the external maximum diameter of said body. Each screwing item is plugged into said anchor hole by pressure during rotation.

Subject matter of the independent Claim 2 of the presented invention consist in the fact, the body of said self-supporting anchor without inner reinforcement pins, is equipped with at least one recessing item having cut segments or rim comprising at least one recessing edge or at least one recessing surface for the creation of an efficient recessing surface formed by a sum of projections of recessing surfaces to a plane orthogonal to the longitudinal axis of body. Said recessing item is situated on one end or end part of said body facing towards the outer surface of said building insulation and extends towards the outside of said body, and wherein the external maximum diameter of said recessing item is always bigger than the external maximum diameter of said body. Each recessing item is plugged into anchor hole by pressure without rotation of anchor.

The anchor assembly hereunder includes an expansion filling material, which fills, after getting hardened: the body of the anchor outside and inside or, as the case may be, the inside of the coil or space spiral of the body, the surroundings of the screwing or recessing item, all free space in the anchoring hole and slots in the building insulation formed after the penetration of the screwing or recessing item into the building insulation.

The main advantage of this invention is increasing the holding-down ability of the anchored building insulation to the body of the anchor and, thereby, increasing the required strength for pulling out the anchored building insulation from the body of the anchor, and especially using the anchoring connection also for extremely stressed building insulating systems and for bigger thicknesses of the building insulations, which were increased in the recent years from the value of 50 mm - 70 mm to the value of 150 and more mm. Strong, non-detachable, reliable and safe connection of the building insulation with the body of the anchor is reflected in high resistance of the building insulation to tearing away from the body of the anchor by alternating forces, e.g. in case of vibrations of the building insulation due to the effects of the forces of wind. The anchoring system pursuant to this invention complies with the requirements for increased demands of load of the insulating systems due to the effect of climatic changes and the requirements for anchoring of the insulating layers, i.e. mounting and connecting of unusual, new composition. The anchoring system pursuant to this invention increases the service-life of the thermally insulating systems in the building industry. The anchor is self-supporting and it does not require any additional inner metal reinforcement items. Metal or plastic netting is an available material, easy to process, which fully complies with the type of anchoring with the expansion filling material. The netting is easy to process into a tubular coil or space spiral. The screwing and/or recessing item operates in the surfaces outside of the body of the anchor in the building insulation or, as the case may be, in the building structure as another structural item for strengthening and anchoring. The screwing or recessing item on the body of the anchor with at least one cutting edge or cutting surface contributes to increasing the force required for pulling out of the building insulation from the body of the anchor, whereby it increases safety of the anchoring assembly in the insulating systems. The penetration of cutting parts of the screwing or recessing item is regardful of the used building insulation and the holes created in this way as marks left behind by cutting edges or surfaces are consequently filled with the expansion material, whereby the strength of the building insulation in the place of the installation of the anchor is restored. Different types and shapes of the screwing and/or recessing item on the body of the anchor respect the requirements put on the anchoring of various types and thicknesses of the building insulations. The anchoring connection, made of an anchor, screwing or recessing item on the body of the anchor and the expansion filling material, increases safety of mounting of the building insulation onto the building structure and, furthermore, the anchoring connection is also suitable for an eroded building structure or, as the case may be, for a building structure with inner holes and cavities, which are reliably filled with the expansion filling material. On the other side, this anchoring connection increases safety of anchoring of the building insulation also by increasing the holding-down force by means of the screwing or recessing item.

The body of the anchor is equipped with at least one screwing or recessing item on one or both of its ends or its end parts or in their close vicinity, Which represents the most suitable location of these items, because the end parts of the body of the anchor facing the building insulation or, on the contrary, the building structure shall carry an increased load.

It is also advantageous when each screwing item is selected from a group including, a screwing module with blades, screwing ring, blades, toad-bearing ring with blades. -

It is also advantageous, when the recessing item is selected from a' group, including a cut segment, rim and shim.

Each screwing item and/or recessing item is located inside the building insulation or, as the case may be, in or behind the building or ceiling structure.

The structure of the screwing item or recessing item achieves optimum efficient screwing or recessing surface for various used building insulations. In case of solid building insulations, it is suitable to use a bigger number of smaller screwing items to achieve the efficient screwing surface. In case of less strong building insulations, a smaller number of screwing items with a larger surface is sufficient for achieving the efficient screwing surface. For achieving the efficient recessing surface, the type of the material used for the building insulation is crucial. In case of recessing efficient surfaces, it is important to achieve the highest possible ratio of *φz* to *φt*, i.e. the ratio of the maximum outer dimension of the recessing surface to the maximum outer dimension of the body of the anchor. The maximum outer dimension is the diameter in a majority of cases. When the screwing item and/or recessing item is located inside the building insulation, the expansion filling material encases all structural items of the anchoring connection, whereby it limits access of water or air humidity to the parts of the connection and it also positively influences the limitation of the creation of the thermal bridge.

It is also advantageous when the anchor is realized as a screwing anchor, which is formed with a combination with an anchor with a rim and a cap screwing module, or a combination of the body of the anchor firmly connected with screwing module, or from the body of the anchor ended with blades, or, as the case may be, from the body of the anchor, provided with a permanent deformation, i.e. shoulder or conical extension.

This screwing anchor does not require any reinforcement structural items, which are nowadays used primarily from metal materials, which can cause the occurrence of thermal bridges. The structure of this screwing anchor with screwing items is suitable especially for bigger thicknesses of the building insulations. Due to its principle of anchoring, a majority of still normally used disc anchors with the steel reinforcement pin is not able to ensure safe securing of the building insulation on the building structure.

The screwing item or recessing item can be formed as one integral unit with the anchor before, at or even after it is inserted into the anchoring hole or as an independent cap or put-on item.

It is also advantageous when the shoulder or conical extension on the external surface of the body of the anchor feature a permanent sufficiently formed deformation for sliding the anchor into the anchoring hole.

The system of the integral anchor or the anchor made of several items enables variability when choosing the anchoring system of the particular insulating layers. This variability e.g. enables also sufficient restoration and anchoring with the anchoring system pursuant to this invention, for already realized but very damaged thermal insulations with insufficient thickness, where there is a threat of destruction. During the restoration of this damaged system, it is possible to use the anchoring system pursuant to this patent, which has the task to realize additional anchoring, i.e. restore the function of the original thermally insulating layers, and the second part of the anchoring system pursuant to this invention ensures sufficient anchoring of additional thermally insulating layers.

At the same time, it is advantageous when the anchor is slid into the anchoring hole through the building insulation up to the anchoring hole in the building structure, and the screwing or recessing items are located in the building insulation or, as the case may be, even behind the building structure. The following parameters are identified in advance with an advantage pursuant to thickness and type of the material of the building insulation.

The distance between the outer surface of the building insulation and the nearest faced point of the screwing item or recessing item is marked as parameter *d*. This parameter *d* is identified by the designer pursuant to the technological regulation of the manufacturer of the anchoring system. This parameter is chosen so as to avoid or prevent from the occurrence of the thermal bridge of the building insulation This parameter can change with a different thickness and it is usually increased with the thickness of the building insulations.

Another parameter is marked as *h*, which is the distance between the most distant point of the screwing or recessing item from the external surface of the building insulation. This parameter is established by used type of the screwing item. Therefore, screwing items with the smallest value of this parameter are used for thinner building insulation.

Another selected parameter is marked as L and it represents the depth of inserting of the body of the anchor into the building insulation. By using the screwing or recessing module, the value of the parameter L is decreased; however, the force necessary for pulling out of the building insulation from the body of the anchor is increased in a major way.

Furthermore, it is advantageous when individual parts of the anchor assembly are made of non-metallic materials or metal stainless materials or metal materials, which have anti-corrosion surface treatment. Filling the anchoring hole with the expansion filling material results in the fact that this material encases all these structural items of the anchoring system, whereby it prevents from penetration of air humidity or water to the used metal parts with anti-corrosion treatment and from their possible corrosion.

It is advantageous for the adjustment of the anchor assembly, specifically for the creation of the recessing items, as for example a shoulder or conical extension, when a mounting jig is used, which includes a solid case, ended with a collet, and in the solid case a movable distance pin is situated for the adjustment of the anchor slid into the building insulation, into the building structure or into the ceiling structure. The mounting jig is usually used during the installation in the horizontal insulation of the ceiling structures, where by the creation of an additional permanent deformation on the anchor, which was slid into or above the building structure through the screwing item in the building insulation, and in this position it was then fixed still before filling the anchor with the expansion filling material. This procedure enables, before the permanent fixation of the anchors, to level the insulated surface with the expansion filling material along the whole surface of the ceiling structure.

For the adjustment of the anchoring assembly, it is advantageous to use the installation tool, which includes a handle, which' is followed with a threaded part that has an adjustable stop, and the threaded part is followed with a driver with longitudinal protrusions, whereas the installation tool is ended with a guiding pin, preferably replaceable. The use of the installation tool is unavoidable for the compliance with the required parameter *d* established by the project, i.e. embedding the anchor into the thermal insulation at a particular depth, which prevents from the occurrence of a thermal bridge. The use of the installation tool is also necessary for correct location of the screwing and recessing item in the building insulation.

The proposed solution of the anchoring connections for safe anchoring of the building insulations in the contact and contactless way complies with the requirements put on this type of anchoring. In the structure, it does not cause the creation of thermal bridges. The use of the anchoring system pursuant to this invention is not time demanding and comparable with other anchoring items used in the area of anchoring of the building insulations.

The advantage of the anchoring system is its variability and safety of the anchoring connections which is achieved with its use. By the composition of various items of this system, the optimum required anchoring effect is always obtained. With the use of it, it is possible to respond to various materials, from which the insulating layers are formed, to their thickness, type of load, weight of the insulating layers or position of the insulating layers. Even the use of the body of the anchor with the created rim considerably influences the size of the force required for pulling out of the insulating material in the direction from the building structure. With the use of the screwing parts of the system, it is possible to perfectly meet the requirement that the anchor does not create the undesired thermal bridge. The anchoring system pursuant to this invention connects in itself all required properties for anchoring the insulating systems and it integrates the best properties of the anchoring items, which are used in this area. The easy-to-produce parts of the systems enable simpler installation of the insulating systems also in other positions that it is usual, i.e. in the horizontal position. The system of creation of the permanent deformation with the mounting jig pursuant to this invention, after sliding of the anchor to the definitive position in the anchoring hole, enables, after securing with the cap screwing part and/or with the use of the screwing anchor, to stabilize the position of the building insulation with respect to the building structure in the required distance from the building structure, e.g. the ceiling insulation, without the prior fixation of the insulating material with glue or vice versa. It results in savings of costs of the glue and in time savings. Inserting or sliding in of the body of the anchor is realized with the use of the installation tool pursuant to this invention, which secures inserting of the body of the anchor into the anchoring hole. Therewith it prevents from incorrect inserting of the body of the anchor by forced installation of the body of the anchor into the anchoring hole and its resulting deformation. The use of this installation tool eliminates the possibility of incorrect or insufficient sliding of the anchor into the anchoring hole at its full length.

One of the main features of this system is the provision of control over the quality of the performed operations in anchoring of the building insulations to the construction supervisor or to another person that is interested in the correct realization of all steps of the installation. With its adjustable or replaceable part, the installation tool repeatedly secures the required inserting of the body of the anchor into the building insulation even during inserting the body of the anchor, whereby it ensures avoiding of the creation of the thermal bridge. The cylindrical part of the installation tool has adjustable length and is replaceable so that it could consider the specific length of the applied anchors.

### Overview of Figures in Drawings

The invention is described in detail hereinbelow in the not limiting exemplary illustrations and it is explained in the enclosed drawings 1 - 36.

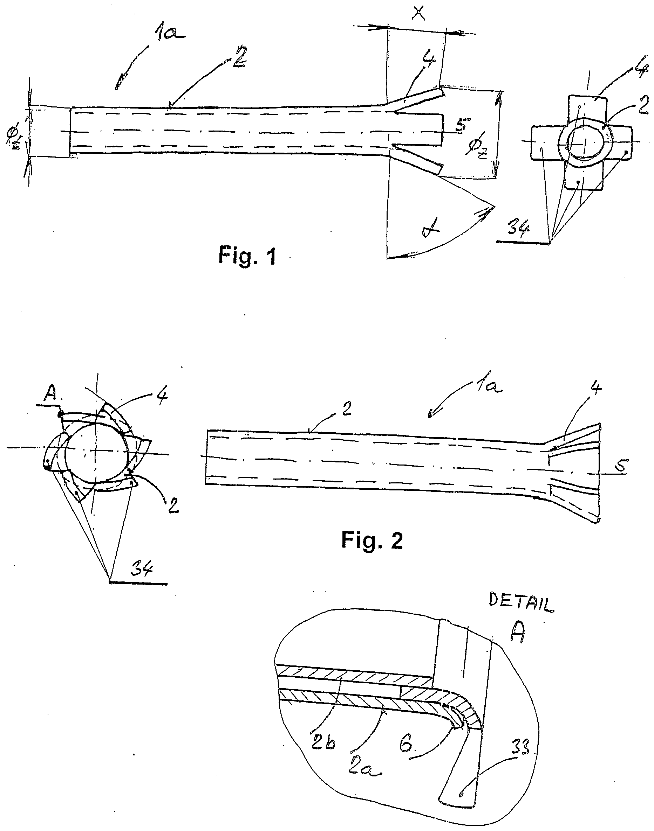

The anchor with cut segments and not illustrated filling is displayed in Fig. 1 and 2.
**Fig. 1** on the left displays a front view of the anchor with four cut segments and on the right a side-view of this anchor is displayed.
**Fig. 2** on the right illustrates the anchor with six cut segments in the front view and on the left this anchor is displayed in the side-view.
   The anchor with a rim and not illustrated filling is illustrated in Figures 3 - 6, where in the left part of the figure a longitudinal section is displayed, in the right part there is a side-view, namely
**Fig. 3** the basic body of the anchor with a rim,
**Fig. 4** the body of the anchor with a rim, interrupted along the circumference,
**Fig**. **5** the body of the anchor with a rim and a flat shim,
**Fig**. **6** the body of the anchor with a rim and a shaped shim.
**Fig. 7** illustrates, in longitudinal section, the anchor with a shoulder, without displayed filling, into which the installation tool is inserted.
Fig. 8 - 11 illustrate possible options of bodies of the screwing anchors without displayed fillings, on the left in the longitudinal section, on the right in the side-view, which illustrate
   **Fig**. **8** the body of the screwing anchor made of coil produced from netting, with rounded screwing module,
   **Fig. 9** the body of the anchor produced from space spiral, with flat screwing ring,
   **Fig. 10** the body of the screwing anchor with tubular body and cap screwing module, consisting of a load-bearing ring with installed blades,
   **Fig. 11** two bodies of the anchors located concentrically in each other, where the outer of which is provided with a rim and the inner body of the screwing anchor is firmly connected with the integrated ring carrying the blades, with detail A from the front view Fig. 11.
Fig. 12 and 13 represent bodies of the screwing anchor, without displayed fillings, with blades, where the body in the front view is displayed in the left part of the figure and in the side-view in the right part of the figure.

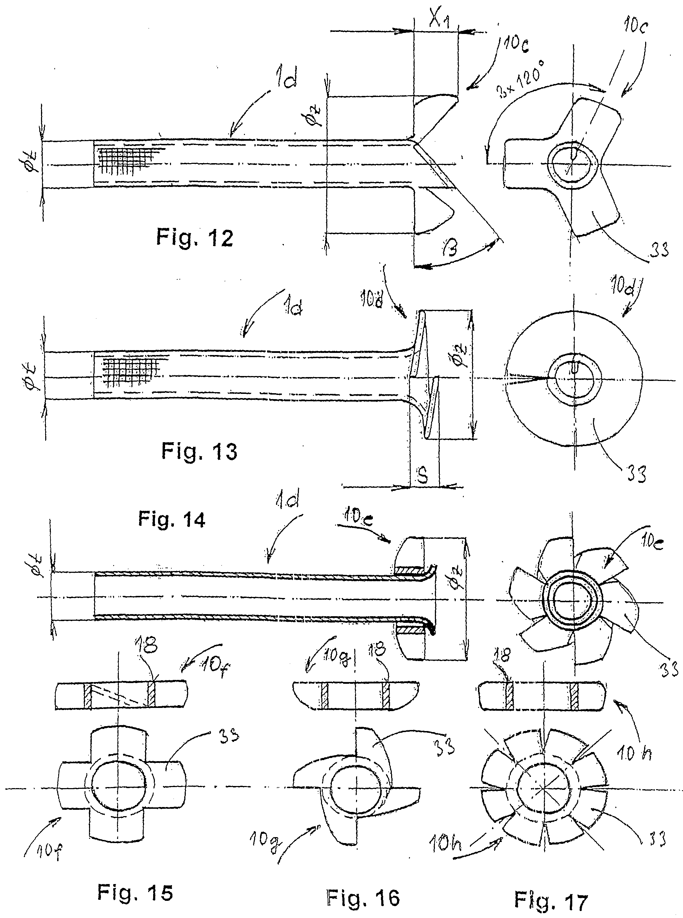

   **Fig. 12** illustrates the body of the screwing anchor with three integrated blades, and
   **Fig. 13** illustrates the body of the screwing anchor with one integrated blade.
Fig. 14 -17 display alternative designs of the cap screwing modules.
**Fig. 14** illustrates in longitudinal section the body of the anchor with a rim, in combination with a cap screwing module in the left part of the figure, in the right part a side-view of the cap screwing module created with 6 blades.
Fig. 15 - 17 illustrate a detail of a cap screwing module, in the bottom part in the horizontal projection and in the top part in the front view, namely
   **Fig. 15** with four square blades,
   **Fig. 16** with four blades with leading edge, and
   **Fig. 17** with eight blades.

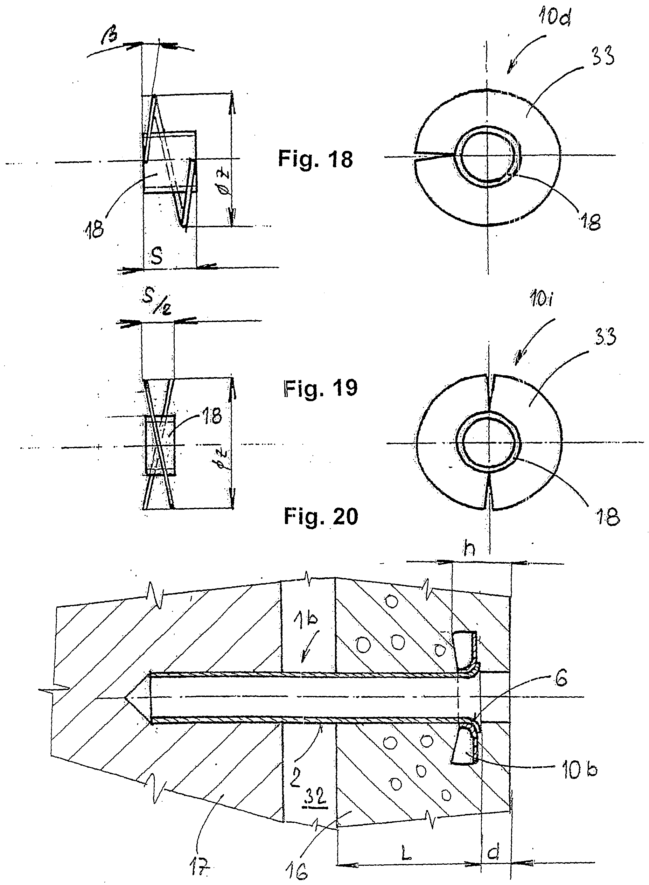

Fig. 18 and 19 display a cap screwing module with one and two blades with the same lead.
   **Fig. 18** illustrates a cap screwing module with one connected blade, in the left part in the front view, in the right part in the side-view,
   **Fig. 19** illustrates a cap screwing module with two blades, in the left part in the front view, in the right part in the side-view.
**Fig. 20** illustrates the application of the body of the anchor with a rim with cap screwing module in the thermally insulating building structure.

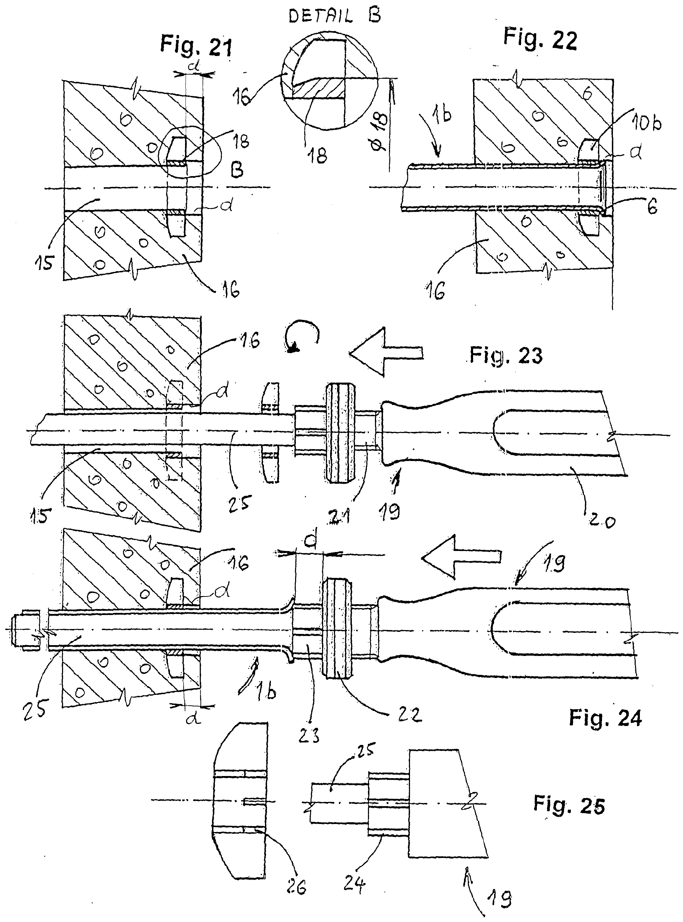

Fig. 21 - 25 illustrate one exemplary realization of the layout of the body of the anchor with a rim in combination with a blade cap screwing module, and the technology of the anchoring procedure in the thermally insulating system in two steps.
   **Fig. 21** illustrates in vertical section a screwed-in cap screwing module in the building insulation in the first technological step, with detail **B** of the screwing module,
   **Fig. 22** displays the body of the anchor with a rim, slid into the cap screwing module in the anchoring hole.
   **Fig. 23** illustrates the first technological step of the previous operation and
   **Fig. 24** illustrates the second technological step.
   **Fig. 25** illustrates an alternative in the transverse section in the left part of the figure a cap screwing module and in the right part a detailed shape of the driver of the installation tool.

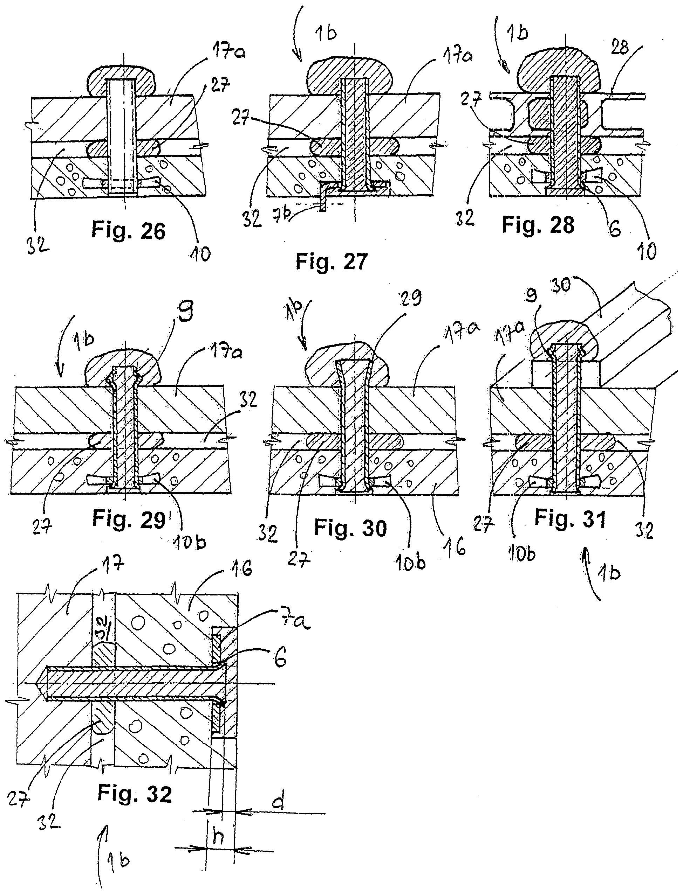

   The applications of the anchors pursuant to this invention in the thermally insulating ceiling system are illustrated in Fig. 26 - 31, which display
**Fig. 26** the anchor with a rim with cap screwing module,
**Fig. 27** the anchor with a rim and a shaped shim,
**Fig. 28** the anchor with a rim with cap screwing module, in anchoring into the ceiling structure with hollow spaces,
**Fig. 29** the anchor with a rim and with a shoulder in combination with a cap screwing module,
**Fig. 30** the anchor with a rim and with conical extension in combination with a cap screwing module,
**Fig. 31** the same design as in Fig. 27 with the use of reinforcements above the ceiling structure.
**Fig. 32** illustrates a vertical section through the thermally insulating system with an anchor with a rim and a flat shim.

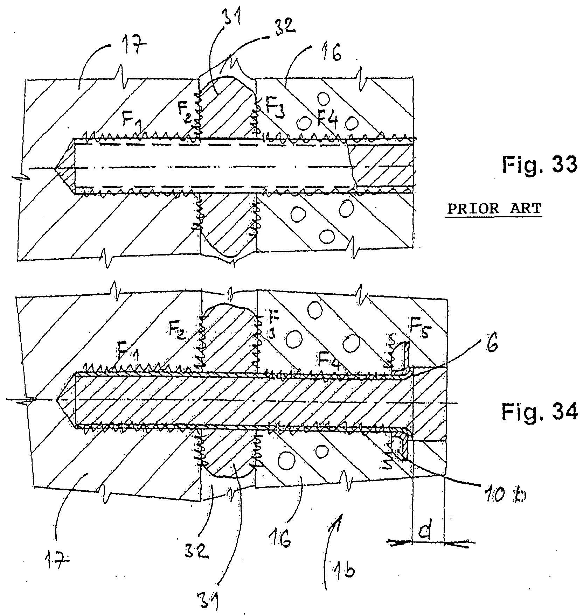

Fig. 33 and 34 display the action of forces in the created anchoring connection of the anchoring system, where the following is displayed:
   **Fig. 33** the state-of-the-art of the technology of anchoring of the building insulations and
   **Fig. 34** anchoring of the building insulations pursuant to this invention for the thermally-insulating building contactless system, and

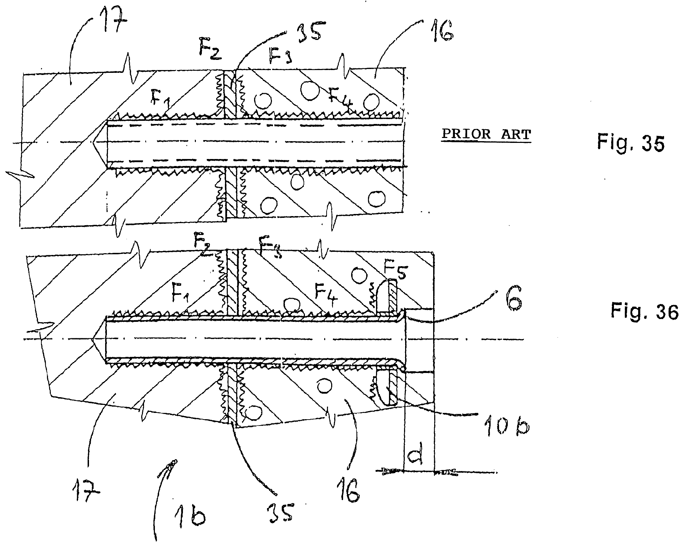

**Fig. 35** the state-of-the-art of the technology of anchoring of the building insulations and
**Fig. 36** anchoring of the building insulations pursuant to this invention for the thermally-insulating building contact system.

### Examples of Designs of the Invention

On the product of the body 2 of the anchor 1, primarily steel fabric or fabric from anti-corrosive steel is used and the diameter of the used wire on the product of the fabric and dimension of the loops of the fabric depend on the type and dimensions of the anchor 1. The body 2 of the anchor 1 can also be made of perforated metal sheet.

The body 2 of the anchor 1 can also be produced from other flat, permanently deformable materials, even non-metallic, which can meet the condition of self-supporting capacity of the body 2 of the anchor 1, i.e. the ability to transfer the required forces in anchoring and also enable the penetration of the expanding filling material 3 from its inner space in the direction of the wall of the anchoring hole 15.

The body 2 of the anchor 1 can be made of the aforesaid materials in the form of a tubular coil or space spiral or tube, on condition that it enables the penetration or filling with the expansion filling material 3 through the loops or perforations from its inner space to the wall of the anchoring hole 15. The body 2 of the anchor 1 can also consist of several concentrically located coils or tubes.

The basic item of the anchoring assembly for thermally insulating, contact and contactless systems is the anchor 1. The anchor 1 is provided, usually on one open end of the body 2, with cut opening segments 4 or opening rim 6 or, as the case may be, extended shoulder 9 or conical extension 29 or screwing module, 10. Alternatively it concerns a screwing anchor 1d with extending open end of the body 2.

The anchor 1 is always slid into the anchoring hole 15 with its untreated end. The other treated end of the body 2, after the application of the anchor 1 into the anchoring hole 15, is located slid into a certain depth of the insulation 16 of the building system, in certain distance from the external surface of the building insulation 16 or tightly levelled with it, which is established by the project of the specific thermally-insulating or hydro-insulating, contact or contactless building system. This distance depends on specific conditions of the anchoring connection and can be in the order of mm. It ensures that the anchor 1 does not create undesired thermal bridges.

Therefore, of course, the biggest external dimension Φt of the body 2 of the anchor 1 is always smaller than the external maximum dimension Φz of the treated end or shoulder 9 of the anchor 1. As, in a majority of bodies 2 of the anchors 1, it it concerns tubular bodies 2, coils or, as the case may be, space spiral, the maximum dimension Φz of the screwing or recessing item, will be bigger than the external diameter Φt of the tubular coil or space spiral of the body 2. In case of use of various types of anchors 1 pursuant to this invention, with the exception of flat and shaped shims 7 for specific cases, it is not necessary to create holes, shoulders or recesses in advance for embedding the anchor 1 into the building insulation 16. During, the application of the anchor 1, the screwing part of the anchor 1 or screwing module 10 enters, with its cutting edge or cutting edges, into the material of the building insulation 16. After the expansion of the filling material 3, the cut slot, which was made by the penetration of the cutting edges into the building insulation 16, is filled with the said material. The expansion filling material 3 fills the whole space of the anchoring hole 15. Its overflow from the anchoring hole 15 is cut off after hardening or setting to the level with the anchored building insulation 16.

Exemplary designs of **anchors 1a with cut segments 4,** displayed in Fig. 1 and 2, are described on the exemplary designs 1 and 2. The cut segments 4 represent a recessing item, with efficient recessing surface 34, which increases resistance of the anchoring system against pulling out of the building insulation 16 from the body 2 of the anchor 1a. The body 2 of the anchor 1a is filled with a not illustrated filling material 3, which fixes the cut segments 4 in their particular position, whereby it ensures efficient function of the recessing surface 34.

### Example 1

### (Fig. 1)

The left part of Fig. 1 displays the anchor 1a in the front view on one open end containing four cut segments 4, which represent recessing items and create the efficient recessing surface 34. The anchor 1a is made by cutting one of the open ends of the body 2 in the longitudinal direction, to various lengths x of cutting, with respect to the longitudinal axis 5 of the body 2. Bending of individual segments 4 is made under the angle α towards the longitudinal axis 5 of the body 2 of the anchor 1a. Individual segments 4 have the angle α of bending, and length x of curvature, which is determined by the type of the not illustrated anchored building insulation 16. Generally it applies that the number of the segments 4 created by cutting into the body 2 of the anchor 1a is determined by the outer diameter Φt of the body 2 of the anchor 1a and the type of the building insulation 16.

Fig. 1 on the right displays a specific exemplary design of this anchor 1a in the side-view, with four equal square cut segments 4, mutually in regular intervals. Each segment 4 preserves its curvature within a considerable part of its length x, which is equal to the outer diameter Φt of winding of the coil of the body 2 of the anchor 1 a. Therefore, in this exemplary design the body 2 of the anchor 1a is made of the coil, but it can be also made of a space spiral or tube, whereas the function of this anchor 1a is the same.

During the installation, the anchor 1a is' slid into the not illustrated anchoring hole with pressure, specifically with the free end without cuts, and without the necessity of rotation of the anchor 1a into the depth of the anchoring hole 15. The depth of the anchoring hole is specified in advance pursuant to the required project, and is set-up on the not illustrated installation tool (see below Fig. 23, 24). After sliding the anchor 1a into the not illustrated building insulation 16, the segments 4 are slid into the building insulation 16 pursuant to the project so as not to create a thermal bridge. It means that the free ends of the cut segments are usually 4 slid into the building insulation 16 in a certain distance from the external surface of the building insulation 16.

By changing the angle α of bending of the segments 4, the biggest outer diameter Φz of the segments 4 can be changed. The smaller the angle α is, the bigger the maximum outer diameter Φz of the segments 4 is and the bigger the force for pulling out of the building insulation 16 from the body 2 of the anchor 1a shall also be.

This type of the anchor 1a is relatively simple to be produced.

### Example 2

### (Fig. 2)

Fig. 2 on the right illustrates another type of the anchor 1a with six cut segments 4 in the front view and on the left this anchor 1a is displayed in the side-view.

This anchor 1a is made in the first step by cutting one open end of the cylindrical body 2 of the anchor 1a, in the longitudinal direction, pursuant to the type of the anchored building insulation 16. In the following production step, the free cut ends of the segments 4 are turned in plane that is vertical to the longitudinal axis 5 of the body of the anchor, in one direction (see Fig. 2 on the left), by deflecting from the longitudinal axis 5 of the body 2 of the anchor 1a, with the relevant radius. Generally it applies that the number of the segments 4 is established by the outer diameter Φt of the body 2 of the anchor 1a and the type of the anchored building insulation 16. This type has the blade segments 4, in regular mutual intervals, inclined tangentially with respect to the cylindrical body 2 of the anchor 1a.

During the installation, the anchor 1a is slid into not illustrated anchoring hole with its free end without cuts and turned to the left, in this specific exemplary design (Fig. 2 on the left). The rotation of this type of the anchor 1a is generally realized always in the direction pursuant to the orientation of turning of the segments 4. The anchor 1a is turned with the use of a driver (see Fig. 25) on the installation tool (see Fig. 23, 24) into the depth set-up on the installation tool.

The same applies to sliding the free ends of the blade segments 4 as in the previous case, i.e. the condition of absence of the creation of thermal bridges shall be complied with. For sliding of this type of the anchor 1a, it is sufficient to generate a smaller force when inserting it into the building insulation 16 than in the previous exemplary design. Fig. 2 on the left displays the point A, which is the most distant point from the longitudinal axis 5 of the body 2 of the anchor 1a. The bigger the distance of the point A will be from the longitudinal axis 5 of the body 2 of the anchor 1a, the bigger the force shall be generated to pull out the building insulation 16 from the anchor 1a after the creation of the anchoring connection.

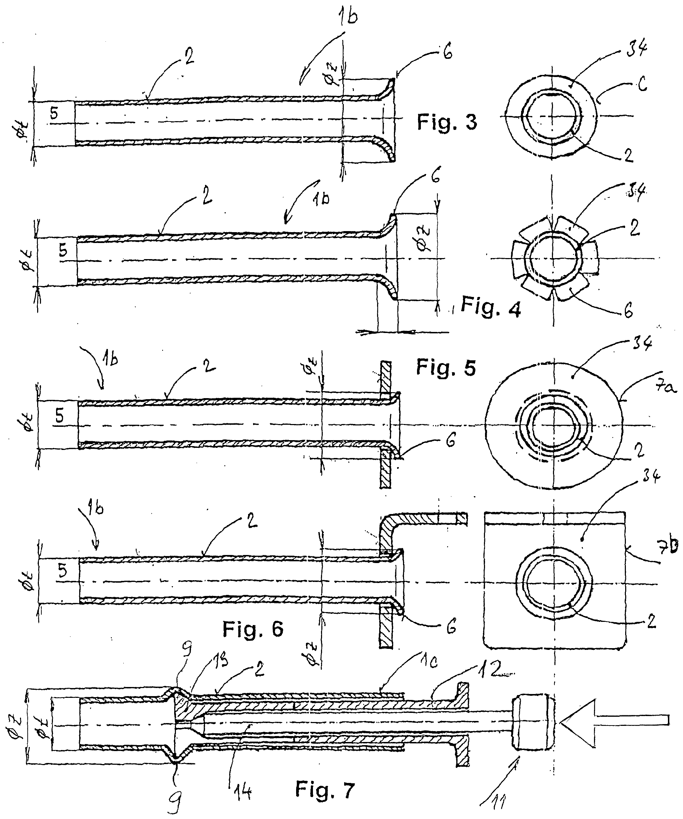

The alternative type **of the anchor 1b with a rim 6** and the not illustrated filling is illustrated in Figures 3 - 6. The rim 6 is opened in the direction from the longitudinal axis 5, so that its outer maximum peripheral dimension, the diameter Φz of the rim 6, is always bigger than outer maximum peripheral dimension, the diameter Φt of the body 2 of the anchor 1b. The rim 6 is a recessing item, which creates the efficient recessing surface 34 of the anchor 1b with a rim 6. The size of the force, which resists pulling out of the building insulation 16 from the body 2 of the anchor 1b, is directly proportional to the diameter Φz of the rim 6 and, at the same time, it depends on the ratio of the diameter Φz of the rim 6 to the diameter Φt of the body 2 of the anchor 1b, therefore also to the size of the efficient recessing surface 34.

### Example 3

### (Fig. 3)

The alternative anchor 1b with peripheral rounded rim 6 on one open end, by which the anchor 1b is slid during anchoring into the building insulation 16 of the building layers, is displayed in Fig. 3, where in the left part of the figure the anchor 1b is displayed in the longitudinal section, in the right part in the side-view. The rim 6 created on one side of the anchor is connected, not interrupted along the periphery of the anchor 1b. Its biggest outer diameter Φz on the open end of the rim 6 depends on the outer diameter Φt of the body 2 of the anchor 1b, type of the material used for the anchored insulation 16, and the material, from which the anchor 1b is made. The creation of the rim 6 on the body 2 of the anchor 1b has a significant effect on the size of the force, which shall be generated for tearing off the building insulation 16 in the direction from the building structure 17, be that for the systems of contact or contactless thermal insulation.

This anchor 1b is produced in dependence on the type of the material of the body 2 of the anchor 1b by pressing in special sequential tools or by the coiling itself, e.g. from a pre-shaped material into the required shape. In case of non-metallic materials of the body 2 of the anchor 1b, it can also concern other types of the production, e.g. by hot forming etc. The type of the production of this anchor 1b is fairly dependent on the size of the serial production.

### Example 4

### (Fig. 4)

The alternative type of the anchor 1b with body 2 of the anchor 1b, on the open end for sliding into the building layers provided with an interrupted rim 6, is displayed in Fig. 4, on the left in the longitudinal section, on the right in the side-view. The rim 6 is also rounded in the transverse section with respect to the longitudinal axis 5; however, it is interrupted along the whole surface from the periphery up to the body 2 of the anchor 1b, and it creates six rectangular blades with radial layout. This version of the rim 6 of the body 2 of the anchor 1b is suitable especially for the body 2 of the anchor 1b, which is made of the material that does not enable to create the connected rim 6 by means of a permanent deformation, and of the anchors 1b, the body 2 of which can be made of a several-fold spiral.

### Example 5

### (Fig. 5)

Fig. 5 displays in the left part the longitudinal section, on the right side-view of the anchor 1b with rounded interrupted rim 6, where on the body 2 immediately before the rounded rim 6 a flat shim 7 is slid. In this case it can concern a combination of various materials used on the product of the body 2 of the anchor 1b with a rim 6 and a flat distributing shim 7a. The annular distribution shim 7a can be manufactured from primarily thermally non-conductive materials so that it would not contribute to the creation of the thermal bridge. The dimensions of the distribution shim 7a, i.e. its outer diameter, inner diameter and its thickness are dependent on type of the anchored material and dimensions of the insulation 16 or, as the case may be, on other strength requirements.

During the application, the body 2 of the anchor 1b is slid into the anchoring hole together with the put-on distribution shim 7a before being filled with the filling material. The body 2 of the anchor 1b shall be inserted into the anchoring hole so that the rim 6 on the body 2 of the anchor 1b would press the flat distribution shim 7a to contact with the metal material. To slide the annular distribution shim 7a into the building insulation 16, a recess is made in the building insulation 16, which fills the whole remaining space of the recess after the filling material expands. Consequently the excessive expansion filling material is levelled (e.g. by cutting off) with the external plane of the building insulation 16. Therewith the creation of the thermal bridge is eliminated without additional gluing of the building insulation 16.

### Example 6

### (Fig. 6)

The body of the anchor 1b with a rim 6, on which a shaped shim 7b is put immediately before the rounded interrupted rim 6, is displayed in Fig. 6, on the left in the longitudinal section, on the right in the side-view.

The shaped shim 7b supported by the body 2 of the anchor 1b can have a different shape and size pursuant to the required purpose. The shaped shim 7b in the exemplary design is made with a suspension loop on the arm of the shape shim 7b. Therewith it is possible to create e.g. a "suspension" on the building structure with various types of application, that is suitable for connecting various objects or structure, e.g. advertisement boards for the objects, which already have external thermal insulation, and the jacket of the construction consists of the insulating layers. In case of objects with an internal thermal insulation, where the building insulation 16, primarily polystyrene, forms the inner jacket, it is possible to attach, in this way, objects or structures with the anchor 1b directly to the building insulation 16. The use of this combination of the body 2 of the anchor 1b with the shaped shim 7b of a varied type is very advantageous for the building structures 17, where for example the inner partition walls are from polystyrene, or for the layers, where polystyrene or another building insulation 16 with similar properties is used. The shaped shim 7b can also include various types of consoles pursuant to the purpose and type of the anchored subjects.

### Example 7

### (Fig. 7)

Fig. 7 illustrates in longitudinal section **the anchor 1c with a shoulder 9** on the body 2, without displayed filling. **A mounting jig 11** is slid into the body 2 of the anchor 1c.

The basic part of the mounting jig 11 is a solid case 12, ended with a collet 13. In the solid case 12, a movable distancing pin 14 is situated.

Fig. 7 schematically displays the creation of permanent additional deformation in the form of an external shoulder 9 on the body 2 of the anchor 1c with the use of the mounting jig 11. This shoulder 9 is made primarily on the body 2 of the anchor 1c, which is already slid into the not illustrated anchoring hole 15 with the objective to create or increase the hold-down force of the anchor 1c.

At first, the mounting jig 11 is slid into the body 2 of the anchor 1c so that the protrusions of the collet 13 are located in the place, where the permanent deformation of the body 2 of the anchor 1c is to be created. With a blow of e.g. a hammer on the central distancing pin 14 of the mounting jig 11, in the direction indicated with the arrow in Fig. 7, the collet 13 is extended, which will cause the extension and permanent deformation of the body 2 of the anchor 1c in the required place. The depth of sliding of the mounting jig 11 into the body 2 of the anchor 1c can be marked in advance on the solid case 12 of the mounting jig 11. After the termination of the impact of the force on the distancing pin 14, this pin is automatically, by pre-tensioning of the collet 13 on the cone of the distancing pin 14, returned to the initial position and the mounting jig 11 is pulled out of the body 2 of the anchor 1c. The creation of the peripheral shoulder 9 with permanent deformation on the body 2 of the anchor 1c has a safety or installation effect. With the use of the shoulder 9, the body 2 of the anchor 1c is secured in the required position and the force is increased, after the anchor 1c is filled with the expansion material, which shall be generated to pull out the anchor 1c from the anchoring hole: 15. The central distancing pin 14 can be also pressed into the cone of the collet 13 manually or with a device, be that continually or with interruption.

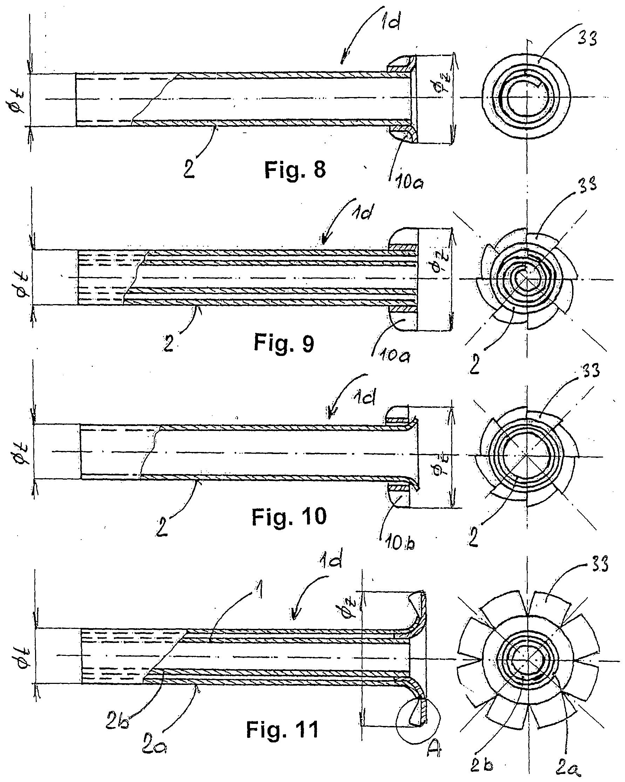

**Screwing anchors 1d** without displayed fillings 3, in various options, displayed in Fig. 8 - 11, on the left in the longitudinal section, on the right in the side-view, are in detail described in the following exemplary designs 8 - 11. The screwing items consist of additional screwing modules 10a in Fig. 8 and 9, and a cap screwing module 10b in Fig. 10. The screwing item in Fig. 11 represents a slid-in screwing anchor 1d on the body 2 of the anchor 1. All these screwing modules create efficient screwing surface 33 that is suitable for the building insulation 16 with higher strength.

### Example 8

### (Fig. 8)

Fig. 8 displays a screwing anchor 1d consisting of the body 2 of the anchor 1d and additional screwing module 10a. The screwing anchor 1d consists of a permanent, fixed connection, which cannot be dismantled, of the additional screwing module 10a and the body 2 in the shape of the coil or space spiral from the material, which is permanently deformable, sufficiently strong for the required strength of anchoring and can also be porous or includes holes enabling overflow of the expansion filling of the body 2 of the screwing anchor 1d from its inner space in the direction of the wall of the anchoring hole. This type of the screwing anchor 1d is suitable for the cases, when it is not possible technologically to create the rim with screwing blades directly from the material, from which the body of the anchor is made.

### Example 9

### (Fig. 9)

Fig. 9 displays the body 2 of the screwing anchor 1d, produced from a spatial multiple spiral, with additional screwing module 10a. The multiple spiral creates, by means of permanent, sufficiently strong connection with additional screwing module 10a, which cannot be dismantled, the body 2 of the screwing anchor 1d. The creation of screwing blades directly on the body 2 of the anchor 1d consisting of the multiple space spiral can be problematic in terms of production. Therefore, the creation of the screwing anchor 1d with the use of the additional screwing module 10a that is firmly connected with the multiple spiral solves this problem. The material of the additional screwing module 10a and the material of the body 2 of the screwing anchor 1d need not be equal but both materials shall enable the creation of a fixed connection, e.g. by welding, gluing etc.

### Example 10

### (Fig. 10)

Fig. 10 displays the screwing anchor 1d with body 2 in the tubular shape with a rim 6 and a cap screwing module 10b, e.g. consisting of a load-bearing ring 18 with installed blades. It is an example of the use of the body 2 of the anchor 1b with a rim 6, where a cap screwing module 10b is put on the body 2 of the anchor 1b with a rim 6. On the body 2 of the anchor 1b, a peripheral uninterrupted or interrupted rim 6 is created on one side. By sliding of the body 2 into the screwing module 10b, this rests on the rim 6 of the anchor 1b, whereby the functionally screwing anchor 1d is created. Then this assembly is inserted into the anchoring hole. By the following filling of the screwing anchor 1d with the expanding expansion material 3, the anchoring connection is created with high ability to contain the forces impacting in the direction of tearing the building insulation 16 away from the building structure 17.

### Example 11

### (Fig. 11)

As it is evident in Fig. 11, the screwing anchor 1d is created from two concentrically located bodies 2a, 2b, where the external body 2a is provided with a rim 6, and the internal body 2b that is firmly connected with the additional screwing module 10a, in this case e.g. created by the integrated ring carrying the blades. In this case, therefore, two concentrically located bodies 2a, 2b and one screwing module 10a are used. The material of the bodies 2 can be preferably steel or stainless steel. The material of the screwing module 10a can be e.g. plastic.

The detail A from the longitudinal section in Fig. 11 illustrates the type of sliding of the screwing module 10a into the screwing anchor 1d with a rim 6. During the application of this alternative screwing anchor 1d into the not illustrated building insulation, the procedure is as follows: at first slide the outer body 2a with a rim 6 into the building insulation; consequently slide the inner body 2b integrally connected with the screwing module 10d. The inner body 2b with the screwing module 10 shall be secured in the required position by screwing into the building insulation in the required depth.

The possible use of the concentric location of two or, as the case may be, more bodies 2a, 2b is suitable for extremely demanded anchoring connections, where the effect of rather big forces is expected. The mutual position of both bodies 2a, 2b is identified by the use of the applicable screwing module 10a, which also performs the distance role and maintains the distance of both bodies 2a, 2b so that the condition of penetration of the filling material is met.

### Example 12

### (Fig. 12)

Fig. 12 represents the body of the screwing anchor 1d with three integrated blades, without displayed filling material 3, where in the left part of the figure the body 2 is displayed in the front view, and in the right part of the figure it is in the side-view. The screwing anchor 1d is made of steel or another fabric enabling its permanent deformation to the required shape of the body 2 of the screwing anchor 1d and its screwing blades. Three screwing blades in the mutual interval of 120 °are made by simple cutting of one free end of the body 2 and rotation of the blades at a particular angle β, whereby the screwing anchor 1d with three blades is created: This screwing anchor 1d is simple to produce and its use with the required effect is simple and efficient. It does not require any modification of the drilled anchoring hole 15 in the building insulation 16 that is not illustrated. It is used for anchoring primarily polystyrene building insulations 16 or building insulations with similar properties.

The number of the screwing blades, their angle of rotation β, outer diameter Φz of the screwing blades and the width x1 of the screwing parts of the body 2 of the screwing anchor 1d is established by the material of the anchored building insulation 16, its thickness, required length of drilled bore of the body 2 of the screwing anchor 1d into the building insulation 16 with the required forces impacting in the direction of tearing the building insulation 16 from the building structure 17. The leading - cutting edges of the screwing blades can be modified to achieve easier penetration through the building insulation 16 duping the production of the body 2 of the screwing anchor 1d.

### Example 13

### (Fig. 13)

Fig. 13 represents the body 2 of the screwing anchor 1d with one integrated blade, creating the screwing module 10d, without displayed filling material 3, where the left part of the figure displays the body 2 in the front view and the right part of the figure in the side-view. The body 2 of the screwing anchor 1d with one integrated blade is made of the material, which enables the creation of an rim 6 on the body 2 of this anchor 1d. Consequently, the rim 6 is permanently deformed in the production into the shape of a simple thread. After inserting the screwing anchor 1d into the drilled anchoring hole 15 in the building insulation 16 with the use of a simple thread of the screwing anchor 1d, and its rotation in the relevant direction pursuant to the sense of the helical line, the screwing anchor 1d is screwed into the required depth in the building insulation 16. The outer diameter Φz of the rim 6 and the rise s of its blades are established by the material of the anchored building insulation 16, its thickness, required length of drilled bore of the body 2 of the screwing anchor 1d into the building insulation 16 with the required forces impacting in the direction of tearing the building insulation 16 away from the building structure 17. To ensure an easier penetration through the building insulation 16, the leading cutting edge can be modified during the production of the body 2 of this screwing anchor 1d.

Alternative designs of details of **cap screwing modules** are displayed in Fig. 14 - 17, in bottom part of the figures 15 - 17 in the horizontal projection and in the top part in the front view. The cap screwing modules 10d, 10f, 10g, 10e have virtually the same screwing blades in radial arrangement in regular intervals, which enable to bore the screwing module 10d, 10f, 10g, 10e into the building insulation 16. The number of blades, their turning and their shape always result from the requirement for anchoring a specific building insulation 16 and its physical and strength properties.

The following shall apply to these alternative designs: by means of the expanding expansion filling material 3 of the screwing anchor 1d, which gets to the blades through the cuts, which are made by the blades of the cap screwing modules 10d, 10f, 10g, 10e by their recessing during screwing, the cap screwing module 10f is connected with the building insulation 16. The strength of the connection is increased and, at the same time, the creation of the possible thermal bridge is limited.

The blades of the screwing module 10d, 10f, 10g, 10e are usually integrally connected with the load-bearing ring 18 and they can be made of the same material or, as the case may be, it can concern a combination of various materials of the load-bearing ring 18 and the blades. It is advantageous to use the fully-plastic design of the screwing module 10d, 10f, 10g, 10e with the load-bearing ring 18.

The screwing module can be made of metallic and non-metallic materials, which comply with the strength conditions for transfer of the relevant forces. In case when the screwing module is connected with the body of the anchor in a fixed way, that cannot be dismantled, the used material shall enable gluing, welding or connection with brass.

### Example 14

### (Fig. 14)

One of possible specific designs of use of the plastic cap screwing module 10e with six sheet screwing blades in combination, with the metal body 2 of the screwing anchor 1d, made e.g. of a metal fabric, is illustrated in Fig. 14. The left part of the figure illustrates, in longitudinal section, the body 2 of the anchor 1b with a rim 6, in combination with the cap screwing module 10e with six screwing blades. The right part of the figure displays a side-view of this cap screwing module 10e. The front leading edge is made partially of a direct line and partially of a curved shape; the rear edge is nearly a straight line. A combination of a straight line and a curved edge create a possibility of easier penetration of the front cutting edge into the building insulation 16.

### Example 15

### (Fig. 15)

Fig. 15 illustrates another possible creation of the cap screwing module 10f with four screwing blades, of which each has a rectangular surface with rounded edges. Between the neighbouring edges of the near blades, nearly the right angle is formed. This specific design is made of a perforated metal sheet and normal carbon steel or, as the case may be, of stainless steel. The advantage of the solution is decreasing weight of this screwing module 10f, and especially thorough connection of blades of the screwing module 10f with not illustrated building insulation 16, into which it is screwed. A cap screwing module 10f can be produced with a waste-free type of production.

### Example 16

### (Fig. 16)

Fig. 16 illustrates another alternative of realization of the cap screwing module 10g with four blades; each blade has a curved leading edge. Each blade has, in the side-view, the rear edge with a straight line edge and the curved front edge, which are in vertical direction to each other. The near edges of the adjacent blades virtually have the right angle, with the difference with respect to the previous design that the blades occupy a smaller surface in the side section. The additional force, which is formed by the use of this type of the cap screwing module 10g, is smaller than in the previous exemplary design. It can be used with an advantage in the building insulations 16 with material of bigger density and strength than polystyrene, e.g. mineral wool.

### Example 17

### (Fig. 17)

Fig. 17 illustrates another creation of the cap screwing module 10h with eight screwing blades. The blades with radial layout in the side-view from Fig. 17, nearly fill the surface between their smallest inner diameter and the biggest diameter. The near edges of the adjacent blades form an acute angle between themselves. In this case it is also possible to obtain this cap screwing module 10h in a waste-free way.

### Example 18

### (Fig. 18)

A cap screwing module 10d with one connected blade is illustrated in Fig. 18, specifically in the left part of the figure 18 in the front view and in the right part of the figure 18 in the side-view. The left part of the figure 18 illustrates the scheme of the helical line with one thread created on the cap screwing module 10d. The helical line creates one thread with the rise s and the outer diameter Φz corresponding to the height of the rise of the thread. By a change of these parameters, various required effects are achieved. In case of this cap screwing module 10d, with the helical line with one thread, there is an advantage of creating a minimum cutting mark in the building insulation 16 on the entry of the bit into the building insulation 16; therefore, a smaller force is sufficient for screwing into the building insulation 16.

The rise s of the thread of this screwing module 10d is bigger in comparison with a double-thread version displayed on the following Fig. 19 and described in example 19. The outer diameter Φz of the screwing blade in the shape of the helical line depends on the required parameters and requirements for the connection created by the relevant not illustrated screwing anchor 4d.

### Example 19

### (Fig. 19)

A cap screwing module 10i with two blades, which have the same rise of the thread and, therefore, they have the outer diameter Φz. The left part of Fig. 19 displays a cap screwing module 10i with two blades in the front view, in the right part in the side-view. It illustrates graphically how the double-thread version of blades in the shape of the helical line decreases the thickness of the cap screwing module 10i in comparison with the screwing module 10d illustrated in Fig. 13 or 18, which has the screwing blade in the shape of the helical line with one thread. In the double-thread solution of the thread of the cap screwing module 10i, thickness of this module is decreased to the value of one half of the rise s/2 of the thread, with respect to the previous exemplary design of the single-thread module 10d with one blade. This fact is used with an advantage in decreasing thickness of the screwing modules, in anchoring of thermal building insulations 16 with smaller thicknesses and also to eliminate the creation of undesired thermal bridges.

### Example 20

### (Fig. 20)

**The application of the anchor 1b with a rim 6 and a cap screwing module 10b:**
Fig. 20 displays, in section, the body of the anchor 1b with a rim 6 slid into the cap screwing module 10b, in this case made of a metal sheet by pressing. The advantage of this solution is the identical radius of the rim of the body of the anchor 1b with the rim 6 with the radius of screwing module 10b. After sliding into screwing module 10b, which is already screwed into the building insulation 16 as tightly as possible, the anchor 1b rests into the screwing module 10 and the depth d of sliding of the rim 6 of the body 2 of the anchor 1b towards to the face side of the building insulation 16 is sufficient, despite the fact that the screwing module 10b is not screwed too deeply into the building insulation 16. The most distant point of the blade of the screwing module 10b from the external surface of the building insulation 16 represents the depth h. This the depth h is the distance, which is optimal with respect to the requirement for the limitation of the thermal bridge and, at the same time, it can be the maximum with respect to reducing the thickness of the building insulation 16, which generates resistance against pulling out of the anchor 1b from the building insulation 6. This possibility of the combination of the body 2 of the anchor 1b and the building insulation 16 is used especially in case of anchoring the building insulation 16 of smaller thicknesses, where too deep screwing of the screwing module 10b is not required but, at the same time, it is necessary to comply with achieving the depth of sliding of the body 2 of the anchor 1b into the building insulation 16. The distance d represents the distance between the external surface of the building insulation 16 and the closest faced point of the screwing item 10b. The depth L corresponds to the sliding of the body 2 of the anchor 1b into the building insulation 16.

### Example 21

### (Fig. 21, 22, 23, 24, 25)

**The application of the installation tool 19 for the adjustment of the anchoring system.**

One of possible exemplary applications of the anchor 1b with a rim 6 in combination with the blade cap screwing module 10b is described hereinbelow, including a possible procedure of anchoring in the thermally insulating system in two steps.

Fig. 21 displays, in vertical section, a cap screwing module 10b screwed into the building insulation 16 in the first technological step and with detail B of this screwing module 10b. It displays a screwing module 10b screwed into the building insulation 16 before sliding the body 2 of the screwing anchor 1d into the anchoring hole 15. The diameter of the anchoring hole 15 is equal to the inner diameter of the cap screwing module 10b due to the trouble-free sliding of the screwing anchor 1d into the anchoring hole 15 through the hole of the cap screwing module 10b. That is why the outer diameter of the load-bearing ring 18 is bigger than the diameter of the drilled anchoring hole 15. By screwing of the cap screwing module 10b into the building insulation 16, this is pressed by the load-bearing ring 18 of the blades of the module 10b in a way, which increases the anchoring hole 15 where the cap screwing module 10b has already passed through the anchoring hole 15. Therefore, the load-bearing ring 18 of blades of the cap screwing module 10b can be designed in a different way in various types of the building insulations 16. To ensure stronger building insulation 16, a wedge shape is advantageous; it is displayed in Fig. 21 in the top right hand corner in detail B. When anchoring the building insulation 16 made of polystyrene, the resistance generated by the building insulation 16 is insignificant and slight clamping and reinforcement of the position of the cap screwing module 10b of the building insulation 16 is welcomed.

Fig. 22 in the right part displays the body 2 of the anchor 10b with a rim 6, creating the screwing anchor 1d, when the body 2 is slid into the cap screwing module 10b in the anchoring hole 15. As the biggest outer diameter φz of the rim 6 of the anchor 1b is bigger than outer diameter φ₁₈ of the load-bearing ring 18 of the blades of the screwing module 10b, the building insulation 16 generates a slight resistance against sliding of the screwing anchor 1d into the building insulation 16 in the area of the rim 6 of the body 2 of the screwing anchor 1d. The rim 6 is designed so that it does not enter into the building insulation 16 under a negative angle; however, it does not concern resistance that would negatively influence time or quality of the installation.

Fig. 23 illustrates the first technological step of the previous operation and Fig. 24 illustrates the following second technological step. Fig. 23 depicts inserting the cap screwing module 10b and follow-up screwing of this module 10b into the required position, i.e. depth d of the sliding module 10b into the building insulation 16. For the realization of this task, the installation tool 19 is used.

The installation tool 19 consists of a handle 20, which is followed with a threaded part 21 that carries an adjustable stop 22. The threaded part 21 is followed with a driver 23 with longitudinal protrusions 24. The installation tool 19 is ended with a guiding pin 25, which can be replaced.

The installation tool 19 falls, with its driver 23 with longitudinal protrusions 24, into the recess 26 in the load-bearing ring 18 of the cap screwing module 10b. A cap screwing module 10b is slid through a guiding pin 25 of the installation tool 19 and is put with its recesses 26 on the part of the installation tool 19 with longitudinal protrusions 24. It enables to enclose a cap screwing module 10b on the face side of the drilled anchoring hole 15, and by slight pressure in the direction into the anchoring hole 15 and by turning in the direction of the rise of the blades screw the cap screwing module 10b into the required position, i.e. depth d of sliding of the module 10b into the building insulation 16.

Fig. 24 displays compliance with the pre-determined depth h and depth h of sliding of the body 2 of the anchor 1 into the building insulation 16 that is pre-set on the installation tool 19. The body 2 of the anchor 1b with the collar 6 is slid through the adjustable pin 25 of the installation tool 19 to the end position, where the rim 6 of the body 2 of the anchor 1b rests on the driver 23 of the installation tool 19 with protrusions 24. Then the anchor 1b is slid into the anchoring hole 15 into the correct position, i.e. depth d of the sliding module 10b into the building insulation 16 determined by the project. Compliance with the dimension of the depth h of sliding determined by the project is enabled by the adjustable stop 22 on the installation tool 19. The installation tool 19 does not enable to slide it deeper or, as the case may be, it shows that the body 2 of the anchor 1 is not in the correct position yet and it needs to be corrected.

Fig. 25 illustrates an alternative design in the transverse section in the left part of the figure - a cap screwing module 10b in longitudinal section with displayed recesses 26 in the load-bearing ring 18.

The right part of Fig. 25 displays a part of the driver 23 of the installation tool 19, which falls with its part with the protrusions 24 into the recesses 26 of the cap screwing module 10b according to the figure 25 on the left.

It generally applies to the installation tool 19, for any screwing anchor 1d and cap screwing module 10b or, as the case may be, for any anchor 1b with a rim 6, that the correct position, i.e. depth d of screwing of the cap screwing module 10b, is signalled with the set-up of the adjustable stop 22 on the installation tool 19, which rests on the face side of the building insulation 16 and will not enable further screwing of the cap screwing module 10b.

The required position, i.e. the depth d of sliding of the module 10 into the building insulation 16, is established by the parameters of the thermally insulating system and the type of thermal insulation of the contact or contactless system. The required position, i.e. depth d of sliding of the module 10b into the building insulation 16, shall be determined by the authorized person pursuant to the applicable technical conditions, subjected to the compliance with the applicable standards for contact or contactless thermally insulating systems.

As the used type and diameter of the cap screwing module 10b and also its position in the building insulations 16, i.e. the depth d of sliding of the module 10b intro the building insulation 16 changes for different parameters of the thermally insulating system, the multi-functional installation tool 19 is equipped with adjustable and replaceable parts, which cover the whole range of used combinations of the screwing modules 10b and bodies 2 of the anchor 1 while respecting their various length and diameters. The adjustable and replaceable parts of the installation tool 19 are the adjustable stop 22 and the guiding pin 25. The replaceable part of the installation tool 19 is the driver 23. The application of the installation tool 19 also avoids incorrect location of the body 2 of the anchor 1b with a rim 6 into the anchoring hole 15 and its possible deformation, during which the required quality of the connection would not have to meet the required properties. It is one of the properties of the system, which is focused on safety anchoring of the thermally insulating layers with the possibility of inspection or self-regulation of quality of the installation.

Other alternatives of use of the screwing system and the mounting jig 11 of the anchors 1 pursuant to this invention in the thermally insulating **ceiling system** are illustrated in Fig. 26 - 31, in the transverse section of the ceiling structure 17a, and they are described in the exemplary designs 22 - 27.

In all these anchoring systems pursuant to the invention, in case it is necessary to exclude the occurrence of the undesired thermal bridge, the anchors 1 are sunk into the building insulation 16. The depth of sinking d of the anchor into the building insulation 16 is proportional to the thickness and type of the used building insulation 16. The value of the depth d, i.e. the distance between the external surface of the building insulation and the closest inclined point of the rim of the screwing item is identified by the project.

### Example 22

### (Fig. 26)

Fig. 26 displays, in the transverse section, the application of the anchoring system when anchoring the building insulation 16 in the ceiling structure 17a. In the figure, the building insulation 16 is anchored with the use of the body 2 of the anchor 1 b with a rim 6 in combination with the screwing module 10. The advantage of this type of anchoring, in comparison of the mostly used common disc anchor, is reliability of the anchoring connection. The body 2 of the anchor 1b pursuant to this invention penetrates the load-bearing ceiling building structure 17a and it is not significant, if it becomes so in the not illustrated gap of the ceiling structure 17a or, as the case may be, if it concerns a part of the ceiling structure 17a from another material than wood or sandwich structure made of different materials, e.g. a porous material.

The procedure of the installation of the anchoring system starts by the creation of the installation gluing points 27 from cement mortar or expansion foam material in the air gap 32 on the ceiling structure 17a, which temporarily fix the building insulation 16 in the correct position. Consequently an anchoring hole 15 is drilled through the building insulation 16 up to building ceiling structure 17a. The application of the anchoring system can be used in the contact and contactless building layers. Depending on it, the type of realization of the installation gluing points 27 or another type of gluing used in the contact type of insulation of the buildings is selected. Consequently a cap screwing module 10 is screwed into the anchoring hole 15 into the required position, i.e. depth d of sliding of the module 10b in the building insulation 16. The anchoring hole 15 is filled, after inserting the body 2 of the anchor 1b with a rim 6 into the anchoring hole 15, with the expansion filling material 3, usually foam.

The use of the anchoring system with the cap screwing module 10 enables safe installation in this position for the insulating layers of bigger weight too.

### Example 23

### (Fig. 27)

Fig. 27 displays the anchoring system pursuant to this invention for the installation of the ceiling insulating system 17, similar to the one in the previous exemplary design 22 displayed in Fig. 26 for the anchor 1b with a rim 6, however with the difference, that instead of the screwing module 10, the shaped shim 7b with a suspended hole is used in this case. This solution enables the installation or additional installation of the ceiling building insulation 16 on the ceiling structure 17a and it also enables the installation of the equipment of adequate weight, lights, audio or video equipment etc.

### Example 24

### (Fig. 28)

Fig. 28 illustrates, in the transverse section of the anchoring system, the anchor 1b with a rim 6 and a cap screwing module 10, in anchoring into the ceiling structure 17a with hollow spaces, e.g. into the ceiling structure 17a consisting of beams 28 with inner cavities.

Anchoring of the ceiling thermally insulating system into the ceiling of this building structure 17a with the use of the current disc anchors is not safe with respect to the inability of expanding the anchoring parts of the disc dowel in the fixed anchoring hole 15.

In case of the anchoring system according to the submitted invention, it is not important in what place of the beam 28 of the ceiling building structure 17a with hollow spaces the anchoring hole 15 is drilled, because the expanding properties of the filling material 3 ensure safe anchoring also in the places, where an anchoring hole 15 was possibly drilled in a place of a cavity of this ceiling structure 17a.

### Example 25

### (Fig. 29)

Fig. 29 illustrates the anchoring system pursuant to the invention with an anchor 1b with a rim 6 and with a shoulder 9 in combination with a cap screwing module 10b. This exemplary design represents the use of the creation of permanent deformation, i.e. shoulder 9, on the body 2 of the anchor 1b with a rim 6 in the required place of the body 2 of the anchor 1b.

In this case, contrary to Fig. 26, the procedure of the installation is as follows:
Gluing points 27 are created in the minimum volume from the expansion filling material 3 on the ceiling structure 17a, the building insulation 16 is enclosed and anchoring holes 15 are drilled. After inserting the body 2 of the anchor 1b with a rim 6 into the anchoring hole 15, a permanent deformation on the body 2 of the anchor 1b is created in the form of a shoulder 9. Consequently, a cap screwing module 10b is screwed into the anchoring hole 15. Then the anchor 1b is filled with the expansion filling material 3. In the application, the anchoring connection creates permanent deformation on the body 2 of the anchor 1b featuring the ability of transferring bigger forces in the axial direction.

In case of an additional need of anchoring another structure to the already thermally insulated ceiling, it is possible to use, in combination with the body 2 of the anchor 1b and the created permanent deformation in the form of a shoulder 9, also a shaped shim 7b, similarly to Fig. 27.

### Example 26

### (Fig. 30)

Fig. 30 illustrates the anchoring system with the anchor 1b with a rim 6 and with a conical extension 29 in combination with a cap screwing module 10b. It concerns another possible type of the permanent deformation created on the body 2 of the anchor 1b with a rim 6. A change of the shape of the permanent deformation, i.e. conical extension 29 at the end of the body 2 of the anchor 1b is achieved with a replacement of the collets 13 in the mounting tool 11. After sliding the anchor 1b into the anchoring hole 15, the end of the anchor 1b, exceeding the ceiling building structure 17a, is shaped with the mounting tool 11 into the conical extension 29.

### Example 27

### (Fig. 31)

Fig. 31 illustrates the anchoring system pursuant to this invention, in the same design as Fig. 29, with the difference, that above the ceiling structure 17a, building reinforcements 30 are placed, which reinforce this building ceiling structure 17a and distribute the load on a bigger surface. The anchoring connection is created with the use of the anchor 1b with a rim 6, the cap screwing module 10b, with the creation of the permanent deformation in the form of shoulder 9 on the body 2 of the anchor 1b, in the place, where the body goes beyond the building reinforcement 30. By filling it with the expansion filling material 3, the installation of the anchoring system is completed.

This solution is suitable in case, when the ceiling structure 17a has not sufficient strength, additional thickness or, as the case may be, if from certain reasons, e.g. due to not enough strong or porous material of the ceiling structure 17a, it is not possible to attach the anchor 1b with a rim 6.

### Example 28

### (Fig. 32)

Fig. 32 illustrates a vertical section through the anchoring system pursuant to this invention, containing the anchor 1b with a rim 6 and with a flat shim 7a. The building insulation 16, e.g. from mineral wool, is anchored to the building structure 17a. In this case it is not always possible to use the screwing module and, therefore, it is necessary, after drilling the anchoring hole 15 in the building insulation 16, to make a recess into the building insulation 16 too with the diameter and depth h pursuant to the dimensions of the used body 2 of the anchor 1b and flat shim 7a. After inserting the body 2 of the anchor 1b with the flat shim 7a and filling the body 2 of the anchor 1b with the expansion filling material 3, it is not necessary to blind the created recess with additional gluing of a ring into the building insulation 16 as it is nowadays in case of other anchors. In this case, the expanding filling material 3 of the body 2 of the anchor 1b fills the whole volume of the anchoring hole 15, including the recess. After drying, the excessive filling material 3 is cut off to be level with the surface of the anchored building insulation 16. It is advantageous in this case, if the flat shim 7a is made of a plastic material.

In the following specific designs 29, 30, 31, 32 displayed in Fig. 33, 34, 35, 36 the **direction of surface effect of forces F1, F2, F3, F4, F5 in the anchoring system** is displayed in waves, namely in the created anchoring connection, where the current state-of-the-art is clarified and discussed for the thermally-insulating building contactless system in Fig. 33 and the application of the anchoring system with an anchor 1b with a rim 6 and a cap screwing module 10b in Fig. 34; and for the thermally-insulating building contact system in Fig. 35 the current state-of-the-art of anchoring of the building insulations and in Fig. 36 the anchoring of the building insulations pursuant to this invention.

### Example 29

### (Fig. 33)

**State-of-the-art** for anchoring building insulations 16 **for thermally insulating contactless system.**

Fig. 33 illustrates the type of the anchoring connection of the thermally insulating contactless system illustrated in the state-of-the-art. This figure displays the connection of the building insulation 16 with the building structure 17 pursuant to the state-of-the-art in the application of the current cylindrical anchor.

The figure displays surface effect of forces F1, F2, F3, F4, which contribute to holding the anchored building insulation 16 on the building structure 17.

The force F1 represents the force that is created by the expansion of the filling material 3 in the anchoring hole 15 in the building structure 17.

The force F2 represents the force that is created between the created gluing target 31 from the filling material 3 and the building structure 17.

The force F3 is the force, which impacts between the gluing target 31 created with the filling material 3 and the building insulation 16.

The force F4 is the force that is created by the expansion of the filling material 3 in the part of the anchor 1, which is slid into the building insulation 16.

A sum of forces F1 + F2 gives the size of the resulting force required for pulling of the anchor 1 from the building structure 17.

A sum of forces F3 + F4 gives the size of the resulting force, which is required for pulling out of the building insulation 16 from the body 2 of the anchor 1.

### Example 30

### (Fig. 34)

**Anchoring building insulation 16 pursuant to the invention for the thermally insulating contactless system** in case of the application of the anchor 1b with a rim 6 and a cap screwing module 10b pursuant to this invention is described hereinbelow.

Fig. 34 displays the anchoring system pursuant to this invention for the comparison of the state-of-the-art identified in the previous exemplary design and displayed in Fig. 33.

To pull out the anchor 1 from the building structure 17, the sum of forces F1 + F2 is required as well as in the previous exemplary design of the state-of-the-art.

In this system of anchoring pursuant to this invention, the force, which is required for pulling out of the building insulation 16 from the body 2 of the anchor 1, is basically identified, for all types of anchors, screwing anchors and screwing modules, by the sum of forces F3 + F4 + F5, where F5 is the force, which contributes in this sum to the considerable increase of the resulting anchoring force.

The force F5 is generated by the use of the anchors 1 pursuant to this invention, which are provided with a rim 6, cut segments 4, screwing anchors 1d, screwing module 10b, shoulder 9, shaped shims 7 and conical extension 29. The size of force F5 increases the resulting force required for pulling out the building insulation 16 from the body 2 of the anchor 1 in a major way.

The force F5 depends especially on two basic parameters, namely:
d recess - distance of the face of the anchor 1 from the external surface of the building insulation 16 and
φt maximum diameter of the round surface or maximum surface of non-circular shapes of anchor.

The recess d of the rim 6 of the anchor 1 shall be optimal with respect to the elimination of the risk of occurrence of the thermal bridge. The requirement for the recess d of the anchor into the building insulation 16 is to achieve the minimum depth but while respecting the condition of the thermal bridge. All anchors pursuant to this invention are suitable for the building insulation 16 of the thickness up to 80 morn, but they are also used for the insulations exceeding 80 mm in case of the expected higher load of the insulating layers.

In case of the building insulations 16 below 80 mm, it is necessary to comply with the condition of the smallest recess d of the anchor to avoid decreasing the force F5 by decreasing the thickness of the building insulation 16, which generates resistance against pulling out of the building insulation 16 from the anchor 1 provided with a rim 6 or a screwing module 10. The bigger the thickness of the recess d of the anchor into the building insulation 16 is, the smaller the force F4 is. Therefore, the force F4 is indirectly proportional to the size of the recess d of the anchor 1.

The force F4 is directly proportional to the depth L of sliding of the body of the anchor 1 into the building insulation 16. Therefore, it is necessary to optimize, in case of the building insulations below 80 mm, the recess d of the anchor 1 especially with respect to avoiding the thermal bridge and decreasing the force F4. It is the use of the screwing anchors 1 or screwing modules 10 that increases safety of anchoring of the building insulations 16, especially in case of smaller thicknesses of the building insulations 16.

The force F5 is determined by the sum of forces from individual surfaces, which are formed by the sum of surfaces that generate resistance to pulling of the building insulation 16 from the anchor 1. From the practical standpoint, these surfaces are mostly round but they can be also different, not round.

### E.g. the following applies to virtually external round surfaces:

The force F5, which is maximized by the object of the submitted invention, for the effect of virtually external round surfaces of the anchor 1, is directly proportional to the value of maximum external dimensions Φz of the screwing or recessing items, which represents the diameter of the circle circumscribed around the outline of the surface or surfaces generating resistance to pulling the building insulation 16 from the body 2 of the anchor 1.

More specifically, in the aforesaid specific exemplary designs, φz represents the maximum diameter of the external round screwing or recessing items representing the circumscribed circle crossing the most distant points of the anchor 1 from the longitudinal axis 5 of the body 2 of the anchor 1, e.g. cut segments 4, rim 6, blades, screwing modules 10, round shims 7, 7a, shoulder 9 and conical extension 29.

The ratio Φz to Φt is also important for the force F5. The force F5 is directly proportional to the ratio Φz to Φt. The bigger this ratio is, the bigger the anchoring force F5 is.

In case of not-round surfaces, direct proportion applies between the force F5 and the sum of created not-round surfaces, which generate resistance to pulling out of the building insulation 16 from of the anchor 1, refer to e.g. the exemplary design of the shape shim 7b in example 6, Fig. 6.

### Example 31

### (Fig. 35)

**State-of-the-art for** anchoring the building insulation 16 in **case of the thermally insulating contact system.**

Fig. 35 illustrates the type of the anchoring connection of the thermally insulating contact system illustrated in the state-of-the-art. This figure displays the connection of the building insulation 16 with the building structure 17 pursuant to the state-of-the-art, in the application of the current cylindrical anchor. The building insulation 16 is glued to the building structure 17 with the use of e.g. a layer of the cement glue or expansion material 3.

The anchoring corresponds to the previous exemplary design with the fact, that between the building structure 17 and building insulation 16, a consistent air gap is not created on purpose and because in the air gap 32 there are no gluing targets 31 but glue 35, the effect of the forces F2, F3 is ensured by the glue 35 on the basis of cement.

F1 represents the force that is created by the expansion of the filling material 3 in the anchoring hole 15 in the building structure 17.

F4 is the force that is created by the expansion of the filling material 3 in the part of the anchor 1, which is slid into the building insulation 16.

A sum of forces F1 + F2 is required to pull the anchor 1 from the building structure 17.

A sum of forces F3 + F4 is required to pull the building insulation 16 from the body 2 of the anchor 1.

### Example 32

### (Fig. 36)

**Anchoring of the building insulation 16 in case of the thermally insulating contact system pursuant to the invention** in the application of the anchor 1b with a rim 6 and a cap screwing module 10b pursuant to this invention is described below.

Fig. 36 displays the anchoring system pursuant to this invention for comparison of the state-of-the-art identified in the previous exemplary design and displayed in Fig. 35.

To pull the anchor 1 from the building structure 17, a sum of forces F1 + F2 is required as well as in the previous exemplary design the state-of-the-art.

The force, which is required for pulling out of the building insulation 16 from the body 2 of the anchor 1 is, in this system of anchoring pursuant to this invention, also for all types of anchors, screwing anchors and screwing modules, established by the sum of forces F3 + F4 + F5; where F5 is the force, which contributes, in this sum, to a considerable increase of the resulting anchoring force.

The relations applicable to the force F3, F4 and F5 identified in the previous exemplary design 30 are the same.

The tests of the anchoring systems pursuant to this invention performed in the long-term demonstrated high reliability of anchoring in the building insulation 16 of the building insulating systems, contact and contactless. This type of anchoring, in which the resultant of forces includes the force F5, is used on condition of a considerable load of the thermally insulating systems or connections in such a way, in which above-standard load is expected. It is also suitable in the cases when it concerns anchoring of more porous and less strong insulating materials. However, it is not in cases of external insulation of the buildings when the applicable standard strictly sets out strength properties of the building insulations 16. On the contrary, in case of anchoring of horizontally placed ceiling insulations, the use of the anchoring system pursuant to this invention is very advantageous.

The force F5, which is created by the use of the screwing modules 10 or screwing anchors 1d, considerably increases the strength of the anchoring system and the anchoring connection.

The anchoring system pursuant to this invention, thanks to the anchors 1 pursuant to this invention, further increases favourable properties also by the fact, that e.g. the blades of the screwing anchor 1d or the screwing module 10b are slid into the building insulation 16, so that they loose the contact with the external environment and so they do not create undesired thermal bridges. With the type of their installation by screwing into the building insulation 16, the screwing anchors 1d and the screwing modules 10, 10a, 10b, 10c, 10d, 10e, 10f, 10g, 10h, 10h, 10i enable exact sliding of the anchor 1 pursuant to the requirement of the project.

E.g. in the specific exemplary design for contactless thermally insulating building system, displayed in Fig. 34, the anchor 1b with a rim 6 is displayed, on which the screwing module 10b is put on. In this case the body 2 of the anchor 1 has the outer diameter Φt equal to approximately 14 mm. In this case, Φz corresponds to the maximum diameter of the cap screwing module 10b, which corresponds to the value of about 30 mm. Polystyrene of the type EPS 70 is used as the building insulation 16. If this building insulation 16 has the thickness of 60 mm, the optimum recess d will correspond to approximately 5 mm, and the length L of sliding of the rim 6 of the anchor 1 will be 55 mm. The recess d depends on the climatic conditions, in which the anchoring is realized. This fact shall be considered by the designer in the preparation of the project documentation.

### Industrial applicability

The anchoring system is designed for the building industry, especially for thermal insulation of external jackets of the buildings.

### Related marks

1 anchor
1a anchor 1a with cut segments 4
1b anchor 1b with a rim 6
1c anchor 1c with a shoulder 9
1d screwing anchor 1d
2 body 2 of the anchor 1
2 external body 2a of the anchor 1
2 internal body 2b of the anchor 1
3 filling material
4 cut segment
5 longitudinal axis
6 rim
7 shim
7a flat shim 7a
7b shaped shim 7b
9 shoulder 9 (on the body 2)
10 screwing module
10a additional screwing module 10a
10b cap screwing module 10b
10c screwing module 10c with 3 blades
10d screwing module 10d with 1 blade
10e screwing module 10e with 6 blades
10f screwing module 10f with 4 square blades
10g screwing module 10g with 4 blades with leading edge
10h screwing module 10h with 8 blades
10i screwing module 10i with 2 blades
11 mounting jig
12 case
13 collet
14 distancing pin
15 anchoring hole
16 building insulation
17 building structure
17 ceiling structure
17b vertical building structure
18 load-bearing ring 18 of the screwing module
19 installation tool
20 handle
21 thread part
22 adjustable stop
23 driver
24 protrusions
25 guiding pin
26 recess in the load-bearing ring
27 gluing body
28 beams
29 conical extension
30 building reinforcements
31 gluing target
32 air gap
33 screwing surface
34 recessing surface
35 glue
Φo maximum external dimension Φ**z** of the screwing item or recessing item
Φt maximum external dimension Φt of the body of the anchor
Φ₁₈ outer diameter Φ₁₈ of the load-bearing ring 18 of blades of the screwing module α angle α of inclination of the segments to the vertical axis of the body of the anchor, vertical to its longitudinal axis
β angle β of rotation of blades to the vertical axis of the body, vertical to its longitudinal axis
d recess d-distance d between the external surface of the building insulation and the closest inclined point of the screwing item
x length x of cut of the segments on the body of the anchor
x1 width x1 of the screwing blades
A the most distant point A of blade segments from the longitudinal axis of the body of the anchor
h the distance h is the distance between the most distant point of the screwing or recessing item from the external surface of the building insulation
L depth L of the sliding body of the anchor into the building insulation
F1, F2, F3, F4, F5 surface strengths

## Claims

1. An anchor assembly suitable for an insulating building contact and contactless system, said assembly comprising:
a building structure (17) and a building insulation (16), between which an air gap (32) is situated in the contactless system, in which gluing targets (31) are formed in said air gap (32);
an anchor (1, 1d) made of metallic or non-metallic netting and created in the form of a tubular coil or spiral;
wherein said anchor is slid into the anchoring hole (15), from the external side of the building insulation (16) and through the building insulation (16) up to building structure (17), and wherein the anchor (1, 1a, 1b, 1c, 1d) in the anchoring hole (15) is filled with the expansion filling material (3), which creates the anchoring connection (3),
**characterized in that**
the body (2) of said self-supporting anchor (1, 1d) without inner reinforcement pins, is equipped with at least one screwing item (10) having screwing blades comprising at least one cutting edge or at least one cutting surface for the creation of an efficient. screwing surface (33) formed by a sum of projections of screwing surfaces (33) to a plane orthogonal to the longitudinal axis (5) of the body (2); wherein said screwing item (10) is situated on one end or end part of said body (2)
facing towards the outer surface of said building insulation (16) and extends towards the outside of said body (2), and wherein the external maximum diameter (Φz) of said screwing item (10), is always bigger than the external maximum diameter (Φt) of said body (2);
wherein each screwing item (10) is plugged into said anchor hole (15) by pressure during rotation,
and wherein said expansion filling material (3) fills, after hardening, the body (2) of said anchor (1, 1d) outside and inside, the surroundings of the external screwing item (10), all free space in the anchoring hole (15) and the marks in the building insulation (16) formed after the penetration of said screwing item (10) into the building insulation (16).

2. An anchor assembly suitable for an insulating building contact and contactless system, said assembly comprising:
a building structure (17) and a building insulation (16), between which an air gap (32) is situated in the contactless system, in which gluing targets (31) are formed in said air gap (32);
the anchor (1, 1a, 1b) made of metallic or non-metallic netting and created in the form of a tubular coil or spiral;
wherein said anchor is slid into the anchoring hole (15) from the external side of the building insulation (16) and through the building insulation (16) up to building structure (17) and wherein the anchor (1, 1a, 1b, 1c, 1d) in the anchoring hole (15) is filled with the expansion filling material (3), which creates the anchoring connection (3),
**characterized in that**
the body (2) of said self-supporting anchor (1, 1a, 1b) without inner reinforcement pins, is equipped with at least one recessing item having cut segments (4) or rim (6) comprising at least one recessing edge or at least one recessing surface for the creation of an efficient recessing surface (34) formed by a sum of projections of recessing surfaces (34) to a plane orthogonal to the longitudinal axis (5) of body (2);
wherein said recessing item is situated on one end or end part of said body (2) facing towards the outer surface of said building insulation (16) and extends towards the outside of said body (2), and wherein the external maximum diameter (Φz) of said recessing item is always bigger than the external maximum diameter (Φt) of said body (2);
wherein each recessing item is plugged into anchor hole (15) by pressure without rotation of anchor (1, 1a, 1b),
and wherein the expansion filling material (3) that fills, after hardening, the body (2) of the anchor (1, 1a, 1b) outside and inside, the surroundings of the external recessing item, all free space in the anchoring hole (15) and the marks in the building insulation (16) formed after the penetration of the recessing item (4, 6) into the building insulation (16).

3. The anchor assembly pursuant to the claim 1, **characterized in that** each screwing item is one item from a group including a screwing module (10), additional screwing module (10a), cap screwing module (10b), screwing module (10c) with 3 blades, screwing module (10d) with 1 blade, screwing module (10e) with 6 blades, screwing module (1 Of) with 4 square blades, screwing module (10g) with 4 blades with leading edge, screwing module (10h) with 8 blades, screwing module (10i) with 2 blades, and load-bearing ring (18) with blades.

4. The anchor assembly pursuant to the claim 2, **characterized in that** each recessing item is one item from a group, including the cut segments (4), rim (6),
flat shim (7a), shaped shim (7b).

5. The anchor assembly pursuant to the claim 1 and 2, **characterized in that** combination screwing item and recessing item represents group, including:
rim (6) as recessing item and cup screwing module (10b) as screwing module.

6. The anchor assembly pursuant to the claim 3, **characterized in that** an integral unit is created anchor (1d) with screwing module (10c) with three blades on body (2) or screwing module (10d) with one blades on body (2).

7. The anchor assembly pursuant to the claim 4, **characterized in that** an integral unit is created of anchor (1a) with cut segments (4) on body (2) or anchor (1 b) with rim (6) on body (2).

8. The anchor assembly pursuant to the claim 3, **characterized in that** the screwing modules (10a, 10b, 10e, 10f, 10e, 10f, 10g, 10h, 10i) with blades are created as an independent on body (2) anchor (1).

9. The anchor assembly pursuant to the claim 4 **characterized in that** the recessing items as the shims (7a, 7b) are created as an independent on body (2) anchor (1).

10. Method of using the anchor assembly pursuant to the claim 1 or 2, **characterized in that** the following parameters are designed in advance pursuant to thickness and type of the material of the building insulation (16):
- distance (d) between the external surface of the building insulation (16) and the nearest facing point of the screwing and/or recessing item,
- distance (h) between the most distant point of the screwing and/or recessing item from the external surface of the building insulation (16) and
- depth (L) of sliding of the body (2) of the anchor (1, 1a, 1b, 1c, 1d) into the building insulation (16).

11. The anchor assembly pursuant to the claim 1 or 2, **characterized in that** on the external surface of the body (2) of the anchor (1) is created the shoulder (9) or conical extension (29) features permanent deformation.

12. Method of adjustment of the anchor assembly pursuant to claim 11 using a mounting jig **characterized in that**
a mounting jig (11), including a solid case (12), ended with a collet (13) and in its the solid case (12) a movable distancing pin (14) is situated, whereas mounting jig (11) is slid into body (2) of anchor (1 c) and a sliding of mounting jig (11) is performed in order to an protrusions of the collet (13) are located in the place where the permanent deformation of the body (2) of the anchor (1c) is to be created, where the depth of sliding of the mounting jig (11) into the body (2) of the anchor (1c) be marked in advance on the solid case (12) of the mounting jig (11), and subsequently with a blow (of e.g. a hammer) on the central distancing pin (14) of the mounting jig (11) the collet (13) is extended and which will cause the extension and permanent deformation of the body (2) of the anchor (1c) in the required place, and after the termination of the impact of the force on the distancing pin (14), this pin (14) is automatically, by pre-tensioning of the collet (13) on the cone of the distancing pin (14), returned to the initial position and the mounting jig (11) is pulled out of the body (2) of the anchor (1c), thereby a permanent deformation on the body (2) of the anchor (1 c), at the end opposite to screwing and/or recessing item, is created.

13. Method of adjustment of the anchor assembly pursuant to claim 5 using an installation tool **characterized in that**
installation tool (19) including a handle (20), which is followed with a thread part (21) that bears the adjustable stop (22), and the thread part (21) is followed with a driver (23) with longitudinal protrusions (24), whereas the installation tool (19) is ended with a guiding pin (25), which is replaceable as an advantage, whereas
the installation tool (19) falls, with its driver (23) with longitudinal protrusions (24), into the recess (26) in the load-bearing ring (18) of the cap screwing module (10b), subsequently a cap screwing module (10b) is slid through a guiding pin (25) of the installation tool (19) and is put with its recesses (26) on the part of the installation tool (19) with longitudinal protrusions (24), which enables to enclose a cap screwing module (10b) on the face side of the drilled anchoring hole (15), and by slight pressure in the direction into the anchoring hole (15) and by turning in the direction of the rise of the blades to screw the cap screwing module (10b) into the required depth (d) of sliding of the module (10b) into the building insulation (16), and
a compliance, with the pre-determined depth (h) and depth (h) of sliding of the body(2) of the anchor (1) into the building insulation (16) that is pre-set on the installation tool (19), is performed, that the body (2) of the anchor (1b) with the collar (6) is slid through the adjustable pin (25) of the installation tool (19) to the end position, where the rim (6) of the body (2) of the anchor (1 b) rests on the driver (23) of the installation tool (19) with protrusions (24), then the anchor (1b) is slid into the anchoring hole (15) into the correct position of depth (d) by he sliding of module (10b) into the building insulation (16) determined by the project, and compliance with the dimension of the depth (h) of sliding determined by the project is enabled by the adjustable stop (22) on the installation tool (19).

## Patentansprüche

1. Ankeranordnung, das für ein Kontaktsystem oder ein kontaktloses System der Gebäudedämmung geeignet ist, das System umfasst:
die Baustruktur (17) und die Gebäudedämmung (16), zwischen denen sich im kontaktlosen System ein luftgefüllter Zwischenraum (32) befindet, in dem Klebepunkte (31) geformt sind;
den Anker (1, 1d), der aus metallischem oder nichtmetallischem Geflecht besteht und die Form einer röhrenförmigen Rolle oder Spirale hat;
wobei dieser Anker in die Ankeröffnung (15) geschoben wird, und zwar von der Außenseite der Gebäudedämmung (16) und durch die Gebäudedämmung (16) bis in die Baustruktur (17), und wo der Anker (1, 1a, 1b, 1c, 1d) in der Ankeröffnung (15) mit expandierenden Füllstoff (3) ausgefüllt wird, der die Ankerverbindung bildet,
**dadurch gekennzeichnet, dass**
der Körper (2) des selbsttragenden Ankers (1, 1d) ohne innere Bewehrungsfortsätze mit wenigstens einem Bohrelement (10) ausgestattet ist, das Schnittschaufeln hat, die wenigstens eine Schnittkante oder wenigstens eine Schnittfläche für die Schaffung einer wirksamen Bohrfläche (33) enthalten, die aus der Summe der Projektionen der Bohrflächen (33) auf der Ebene senkrecht zur Längsachse (5) des Körpers (2) besteht; wobei sich das Bohrelement (10) an einem Ende oder Endteil des Körpers (2) befindet, der der Außenoberfläche der Gebäudedämmung (16) zugewandt ist und in Richtung zur Außenseite des Körpers (2) durchgezogen ist, und dabei ist der maximale Außendurchmesser (Φz) des Bohrelements (10) immer größer als der äußere maximale Durchmesser (Φt) des Körpers (2);
wobei jedes Bohrelement (10) durch den Druck während des Drehens in eine Ankeröffnung (15) geschoben wird,
und der expandierende Füllstoff (3) nach der Aushärtung den Körper (2) des Ankers (1, 1d) außen und innen, die Umgebung des äußeren Bohrelements (10), den gesamten freien Räum in der Ankeröffnung (15) und die Spuren in der Gebäudedämmung (16), die nach dem Eindringen des Bohrelements (10) in die Gebäudedämmung (16) entstehen, ausfüllt.

2. Ankeranordnung, das für ein Kontaktsystem oder ein kontaktloses System der Gebäudedämmung geeignet ist, das System umfasst:
die Baustruktur (17) und die Gebäudedämmung (16), zwischen denen sich im kontaktlosen System ein luftgefüllter Zwischenraum (32) befindet, in dem Klebepunkte (31) geformt sind;
den Anker (1, 1d), der aus metallischem oder nichtmetallischem Geflecht besteht und die Form einer röhrenförmigen Rolle oder Spirale hat;
wobei dieser Anker in die Ankeröffnung (15) geschoben wird, und zwar von der Außenseite der Gebäudedämmung (16) und durch die Gebäudedämmung (16) bis in die Baustruktur (17), und wo der Anker (1, 1a, 1b, 1c, 1d) in der Ankeröffnung (15) mit expandierendem Füllstoff (3) ausgefüllt wird, der die Ankerverbindung bildet,
**dadurch gekenntzeichnet,** dass
der Körper (2) des selbsttragenden Ankers (1, 1a, 1b) ohne innere Bewährungsfortsätze mit wenigstens einem Senkerelement ausgestattet ist, das angeschnittene Segmente (4) oder einen Rand (6) hat, die wenigstens eine Senkerkante oder wenigstens eine Senkerfläche für die Schaffung einer wirksamen Senkerfläche (34) enthalten, die aus der Summe der Projektionen der Senkerflächen (34) auf der Ebene senkrecht zur Längsachse (5) des Körpers (2) besteht;
wobei sich das Senkerelement an einem Ende oder Endteil des Köpers (2) befindet, der der Außenoberfläche der Gebäudedämmung (16) zugewandt ist und in Richtung zur Außenseite des Körpers (2) durchgezogen ist, und dabei ist der äußere maximale Durchmesser (Φz) des Senkerelements immer größer als der äußere maximale Durchmesser (Φt) des Körpers (2);
wobei jedes Senkerelement durch den Druck während des Drehens des Ankers (1, 1a, 1b) in die Ankeröffnung (15) geschoben wird,
und der expandierende Füllstoff (3) nach der Aushärtung den Körper (2) des Ankers (1, 1a, 1b) außen und innen, die Umgebung des äußeren Senkerelements (10), den gesamten freien Raum in der Ankeröffnung (15) und die Spuren in der Gebäudedämmung (16), die nach dem Eindringen des Senkerelements (4,6) in die Gebäudedämmung (16) entstehen, ausfüllt.

3. Ankeranordnung gemäß dem Anspruch 1, **dadurch gekennzeichnet, dass** jedes Bohrelement ein Element aus der Gruppe ist, die das Bohrmodul (10), das zusätzliche Bohrmodul (10a), das Überwurf-Bohrmodul (10b), das Bohrmodul (10c) mit drei Schaufeln, das Bohrmodul (10d) mit einer Schaufel, das Bohrmodul (10e) mit sechs Schaufeln, das Bohrmodul (10f) mit 4 quadratischen Schaufeln, das Bohrmodul (10g) mit vier Schaufeln mit Anlaufkante, das Bohrmodul (10h) mit acht Schaufeln, das Bohrmodul (10i) mit zwei Schaufeln und die Tragrolle (18) mit Schaufeln einschließt.

4. Ankeranordnung gemäß dem Anspruch 2, **dadurch gekennzeichnet, dass** jedes Senkerelement ein Element aus der Gruppe ist, die das angeschnittene Segment (4), den Rand (6), die Unterlage (7), die flache Unterlage (7a) und die Formunterlage (7b) einschließt.

5. Ankeranordnung gemäß dem Anspruch 1 und 2, **dadurch gekennzeichnet, dass** die Kombination des Bohrelements und des Senkerelements eine Gruppe darstellt, die folgendes einschließt: den Rand (6) als Senkerelement und das Überwurf-Bohrmodul (10b) als Bohrelement.

6. Ankeranordhung gemäß dem Anspruch 3, **dadurch gekennzeichnet, dass** die integrale Einheit aus einem Anker (1d) mit Bohrmodul (10c) mit drei Schaufeln am Körper (2) oder Bohrmodul (10d) mit einer Schaufel am Körper (2) besteht.

7. Ankeranordnung gemäß dem Anspruch 4, **dadurch gekennzeichnet, dass** die integrale Einheit aus einem Anker (1a) mit angeschnittenen Segmenten (4) am Körper (2) oder Anker (1b) mit Rand (6) am Körper (2) besteht.

8. Ankeranordnung gemäß dem Anspruch 3 **dadurch gekennzeichnet, dass** die Bohrmodule (10a, 10b, 10e, 10f, 10g, 10h, 10i) mit Schaufeln als vom Körper (2) des Ankers (1) unabhängige entworfen sind.

9. Ankeranordnung gemäß dem Anspruch 4 **dadurch gekennzeichnet, dass** die Senkerelemente als Unterlagen (7a, 7b) als vom Körper (2) des Ankers (1) unabhängige entworfen sind.

10. Der Art der Nutzung des Ankeranordnungs gemäß dem Anspruch 1 oder 2
**dadurch gekennzeichnet, dass**
gemäß der Stärke und Art des Materials der Gebäudedämmung (16) im Voraus die folgenden Parameter bestimmt sind:
- Entfernung (d) zwischen der Außenoberfläche der Gebäudedämmung (16) und dem nächsten zugekehrten Punkt des Bohr- und/oder Senkerelements,
- Entfernung (h) zwischen dem entferntesten Punkt des Bohrpunktes und/oder des Senkerelements von der Außenoberfläche der Gebäudedämmung (16) und
- Tiefe (L) des Einschiebens des Körpers (2) des Ankers (1, 1a, 1b, 1c, 1d) in die Gebäudedämmung (16).

11. Das Ankeranordnung gemäß dem Anspruch 1 oder 2 **dadurch gekennzeichnet, dass** auf der Außenoberfläche des Körpers (2) des Ankers (1) ein Einschnitt (9) oder eine kegelförmige Erweiterung (29) geschaffen wurde, die eine dauerhafte Deformation aufweist.

12. Die Art der Anpassung des Ankeranordnung gemäß dem Anspruch 11 durch Nutzung eines Verformungsmittels **dadurch gekennzeichnet, dass** das Verformungsmittel (11) eine feste Hülle (12) enthält, die durch eine Spannzange (13) abgeschlossen wird, und in dessen fester Hülle (12) sich ein beweglicher Spreizdorn (14) befindet, wobei
das Verformungsmittel (11) so in das Innere des Körpers (2) des Ankers (1c) geschoben wird, dass sich die Vorsprünge der Spannzange (13) an der Stelle befinden, wo die dauerhafte Deformation des Körpers (2) des Ankers (1c) geschaffen werden soll, wobei man die Tiefe des Einschiebens des Verformungsmittels (11) in den Körper (2) des Ankers (1 c) vorher auf der festen Hülle (12) des Verformungsmittels (11) kennzeichnen kann, und anschließend kommt es durch einen Schlag (z.B. mit dem Hammer) auf den mittleren Spreizdorn (14) des Verformungsmittels (11) zum Auseinanderziehen der Spannzange (13), die ein Auseinanderziehen und eine dauerhafte Deformation des Körpers (2) des Ankers (1c) an der verlangten Stelle bewirkt, und nach dem Ende des Wirkens der Kraft auf den Spreizdorn (14) kehrt der Spreizdorn (14) automatisch durch die Vorspannung der Spännzange (13) auf den Kegel des Spreizdorns (14) in die Ausgangsposition zurück, und das Verformungsmittel (11) wird aus dem Körper (2) des Ankers (1c) herausgezogen, wodurch eine dauerhafte Deformation am Körper (2) des Ankers (1c) an dem Ende geschaffen wird, das dem Bohr- und/oder Senkerelement gegenüberliegt.

13. Die Art der Anpassung des Ankeranordnung gemäß dem Anspruch 5 durch Nutzung eines Montagemittels **dadurch gekennzeichnet, dass**
das Montageelement (19) einen Griff (20) enthält, an den ein Gewindeteil (21) anschließt, der einen einstellbaren Anschlag (22) trägt, und an den Gewindeteil (21) schließt sich ein Mitnehmer (23) mit Längsfortsätzen (24) an, wobei das Montagemittel (19) durch einen Führungsbolzen (25) abgeschlossen wird, der austauschbar sein kann, wobei das Montageelement (19) mit seinem Mitnehmer (23) mit Längsfortsätzen (24) in den Durchbruch (26) in der Tragrolle (18) des Überwurf-Bohrmoduls (10b) einschnappt, anschließend wird das Überzieh-Bohrmodul (10b) über den Führungsbolzen (25) des Montagemittels (19) durchgezogen und mit seinen Durchbrüchen (26) auf den Teil des Montagemittels (19) mit den Längsfortsätzen (24) aufgesetzt, was es ermöglicht, das Überzieh-Bohrmodul (10b) an die Frontseite der ausgebohrten Ankeröffnung (15) anzulegen, und durch leichten Druck in Richtung der Ankeröffnung (15) und durch Drehen in Steigrichtung der Schaufeln wird das Überzieh-Bohrmodul (10b) in der verlangten Tiefe (d) des Einschiebens des Moduls (10b) in der Gebäudedämmung (16) verschräubt, und die Einhaltung der vorher festgelegten Tiefe (h) und der auf dem Montagemittel (19) vorher eingestellten Tiefe (h) des Einschiebens des Körpers (2) des Ankers (1b) in die Gebäudedämmung (16) erfolgt durch die Voreinstellung der Installation des Montagemittels (19) so, dass der Körper (2) des Ankers (1 b) mit dem Kragen (6) über den einstellbaren Dorn (25) des Montagemittels (19) in die äußerste Position aufgesteckt wird, wo sich der Rand (6) des Körpers (2) des Ankers (1 b) auf den Mitnehmer (23) des Montägemittels (19) mit den Fortsätzen (24) stützt, danach wird der Anker (1 b) in der Ankeröffnung (15) in die richtige Position der Tiefe (d) des Einschiebens des Moduls (10b) in die Gebäudedämmung (16), die vom Projekt bestimmt ist, geschoben, und die Einhaltung des vom Projekt bestimmten Maßes der Tiefe (h) des Einschiebens wird durch den einstellbaren Anschlag (22) am Montagemittel (19) ermöglicht.

## Revendications

1. Ensemble d'ancrage adapté pour un système isolant à contact et sans contact de construction, le système comportant :
une structure de construction (17) et une isolation de construction (16), entre lesquelles se trouve dans un système sans contact un espace d'air (32), dans lequel sont créées des mires collantes (31);
une ancre (1, 1d) faite en treillis métallique ou non métallique et créée sous forme de bobine tubulaire ou de spirale;
où cette ancre est insérée dans un orifice d'ancrage (15), du côté extérieur de l'isolation de construction (16) et à travers l'isolation de construction (16) jusqu'à la structure de construction (17), et où l'ancre (1, 1a, 1b, 1c, 1d) dans l'orifice d'ancrage (15) est remplie d'une matière de remplissage d'expansion (3), formant un joint d'ancrage,
**se caractérisant par le fait que**
le corps (2) de l'ancre autoportante (1, 1d) sans mandrins de renforcement internes, est équipé au moins d'un élément à visser (10) ayant des pales de coupe comportant au moins un bord de coupe ou au moins une surface de coupe pour la création d'une surface à visser effective (33) créée par la somme des projections des surfaces à visser (33) pour un plan perpendiculaire à l'axe longitudinal (5) du corps (2);
où l'élément à visser (10) se trouve à l'extrémité ou sur la partie finale du corps (2) renversé vers la surface externe de l'isolation de construction (16) et est étiré vers le côté extérieur du corps (2), le diamètre externe maximal (Φz) de l'élément à visser (10) étant toujours supérieur au diamètre maximal externe (Φt) du corps (2);
chaque, élément à visser (10) étant inséré dans l'orifice d'ancrage (15) par pression pendant la rotation,
et où la matière de remplissage d'expansion (3) remplit, après durcissement, le corps (2) de l'ancre (1, 1d) à l'extérieur et à l'intérieur, les environs de l'élément à visser extérieur (10), tout l'espace libre dans l'orifice d'ancrage (15) et les traces dans l'isolation de construction (16) nées après pénétration de l'élément à visser (10) dans l'isolation de construction (16).

2. Ensemble d'ancrage adapté pour un système isolant à contact et sans contact de construction, le système comportant:
une structure de construction (17) et une isolation de construction (16), entre lesquelles se trouve dans un système sans contact un espace d'air (32), dans lequel sont créées des mires collantes (31);
une ancre (1, 1d) faite en treillis métallique ou non métallique et créée sous forme de bobine tubulaire ou de spirale;
où cette ancre est insérée dans un orifice d'ancrage (15), du côté extérieur de l'isolation de construction (16) et à travers l'isolation de construction (16) jusqu'à la structure de construction (17), et où l'ancre (1, 1a, 1b, 1c, 1d) dans l'orifice d'ancrage (15) est remplie d'une matière de remplissage d'expansion (3), formant un joint d'ancrage,
**se caractérisant par le fait que**
le corps (2) de l'ancre autoportante (1, 1a, 1b) sans mandrins de renforcement internes, est équipé au moins d'un élément de chambrage ayant des segments découpés (4) ou un rebord (6) comportant au moins un bord de chambrage ou au moins une surface de chambrage pour la création d'une surface de chambrage effective (34) créée par la somme des projections des surfaces de chambrage (34) pour un plan perpendiculaire à l'axe longitudinal (5) du corps (2);
où l'élément de chambrage se trouve à une extrémité ou sur la partie finale du corps (2) renversé vers la surface externe de l'isolation de construction (16) et est étiré vers le côté extérieur du corps (2), le diamètre externe maximal (Φz) de l'élément de chambrage étant toujours supérieur au diamètre maximal externe (Φt) du corps (2);
chaque élément de chambrage étant inséré dans l'orifice d'ancrage (15) par pression sans rotation de l'ancre (1, 1a, 1b),
et où la matière de remplissage d'expansion (3) remplit, après durcissement, le corps (2) de l'ancre (1, 1a, 1b) à l'extérieur et à l'intérieur, les environs de l'élément de chambrage extérieur (10), tout l'espace libre dans l'orifice d'ancrage (15) et les traces dans l'isolation de construction (16) nées après pénétration de l'élément de chambrage (4,6) dans l'isolation de construction (16).

3. Ensemble d'ancrage selon la revendication 1, **se caractérisant par le fait que** chaque élément à visser est élément du groupe incluant un module à visser (10), un module à visser complémentaire (10a), un module à visser à chapeau (10b), un module à visser (10c) à trois pales, un module à visser (10d) à une pale, un module à visser (10e) à six pales, un module à visser (10f) à 4 pales carrées, un module à visser (10g) à quatre pales avec bord d'attaque, un module à visser (10h) à huit pales, un module à visser (10i) à deux pales et un anneau portant (18) à pales.

4. Ensemble d'ancrage selon la revendication 2, **se caractérisant par le fait que** chaque élément de chambrage est élément du groupe incluant un segment découpé (4), un rebord (6), une rondelle (7), une rondelle plate (7a), une rondelle profilée (7b).

5. Ensemble d'ancrage selon la revendication 1 et 2, **se caractérisant par le fait que** la combinaison de l'élément à visser et de l'élément de chambrage représente un groupe incluant : un rebord (6) en tant qu'élément de chambrage et un module à visser à chapeau (10b) en tant qu'élément à visser.

6. Ensemble d'ancrage selon la revendication 3, **se caractérisant par le fait que** l'unité intégrale est formée par une ancre (1d) avec module à visser (10c) à trois pales sur le corps (2) ou un module à visser (10d) à une pale sur le corps (2).

7. Ensemble d'ancrage selon la revendication 4, **se caractérisant par le fait que** l'unité intégrale est formée d'une ancre (1a) à segments découpés (4) sur le corps (2) ou d'une ancre (1b) avec rebord (6) sur le corps (2).

8. Ensemble d'ancrage selon la revendication 3, **se caractérisant par le fait que** les modules à visser (10a, 10b, 10e, 10f, 10g, 10h, 10i) à pales sont formés en tant qu'indépendants du corps (2) de l'ancre (1).

9. Ensemble d'ancrage selon la revendication 4**, se caractérisant par le fait que** les éléments de chambrage comme les rondelles (7a, 7b) sont formés en tant qu'indépendants du corps (2) de l'ancre (1).

10. Mode d'utilisation du ensemble d'ancrage selon la revendication 1 ou 2,
**se caractérisant par le fait que**
les paramètres suivants sont définis à l'avance selon l'épaisseur et le type de matériau de l'isolation de construction (16) :
- distance (d) entre la surface extérieure de l'isolation de construction (16) et le point renversé le plus proche de l'élément à visser et/ou de chambrage,
- distance (h) entre le point le plus éloigné du point à visser et/ou de l'élément de chambrage par rapport à la surface extérieure de l'isolation de construction (16) et
- profondeur (L) d'insertion du corps (2) de l'ancre (1, 1a, 1b, 1c, 1d) dans l'isolation de construction (16).

11. Ensemble d'ancrage selon la revendication 1 ou 2, **se caractérisant par le fait qu'**est formé sur la surface extérieure du corps (2) de l'ancre (1) un épaulement (9) ou un élargissement conique (29) faisant apparaître une déformation permanente.

12. Mode d'ajustement du ensemble d'ancrage selon la revendication 11 par emploi d'un dispositif de façonnage, **se caractérisant par le fait que**
le dispositif de façonnage (11) comporte un étui fixe (12), achevé par une pince de serrage (13), un mandrin d'écartement (14) se trouvant dans son étui fixe,
le dispositif de façonnage (11) s'insérant à l'intérieur du corps (2) de l'ancre (1c), de façon à ce que les avancées de la pince de serrage (13) se trouvent à l'endroit où doit se créer une déformation permanente du corps (2) de l'ancre (1c), la profondeur d'insertion du dispositif de façonnage (11) dans le corps (2) de l'ancre (1c) pouvant être désignée à l'avance sur l'étui fixe (12) du dispositif de façonnage (11), la pince de serrage (13) s'écartant par la suite par un coup (par exemple de marteau) sur le mandrin central d'écartement (14) du dispositif de façonnage (11), entraînant un écartement et une déformation permanente du corps (2) de l'ancre (1c) à l'endroit réclamé et, après la fin de l'action de la force sur le mandrin d'écartement (14), le mandrin d'écartement (14) revenant automatiquement par précontrainte de la pince de serrage (13) sur le cône du mandrin d'écartement (14) en position initiale et le dispositif de façonnage (11) étant retiré du corps (2) de l'ancre (1c), ce qui crée une déformation permanente sur le corps (2) de l'ancre (1c), sur l'extrémité opposée à l'élément à visser et/ou de chambrage.

13. Mode d'ajustement du ensemble d'ancrage selon la revendication 5 par emploi d'un dispositif de montage, **se caractérisant par le fait que**
le dispositif de montage (19) comporte une poignée (20), à laquelle est raccordée une partie filetée (21), portant une butée réglable (22), un entraîneur (23) avec avancées longitudinales (24) étant lié à la partie filetée (21), le dispositif de montage (19) étant terminé par un mandrin de guidage (25) pouvant être remplaçable,
le dispositif de montage (19) grâce à son entraîneur (23) à avancées longitudinales (24) tombant dans une alvéole (26) dans l'anneau portant (18) du module à visser à chapeau (10b), le module à visser à chapeau (10b) étant enfilé par le mandrin de guidage (25) du dispositif de montage (19) et placé par ses alvéoles (26) sur la partie du dispositif de montage (19) avec avancées longitudinales (24), ce qui permet d'appliquer le module à visser à chapeau (10b) sur la partie frontale de l'orifice d'ancrage percé (15), le module à visser à chapeau (10b) étant vissé avec une légère pression dans le sens vers l'orifice d'ancrage (15) et en le faisant tourner dans le sens de montée des pales dans la profondeur réclamée (d) d'insertion du module (10b) dans l'isolation de construction (16), et le respect de la profondeur déterminée à l'avance (h) et de la profondeur réglée à l'avance (h) sur le dispositif de montage (19) d'insertion du corps (2) de l'ancre (1b) dans l'isolation de construction (16) étant réalisé par préréglage de l'installation du dispositif de montage (19), de façon à ce que le corps (2) de l'ancre (1b) à rebord (6) soit inséré à travers le mandrin réglable (25) du dispositif de montage (19) en position extrême, où le rebord (6) du corps (2) de l'ancre (1b) s'appuie sur l'entraîneur (23) du dispositif de montage (19) à avancées (24), l'ancre (1b) étant ensuite insérée dans l'orifice d'ancrage (15) dans la bonne position de profondeur (d) d'insertion du module (10b) dans l'isolation de construction (16) déterminée par le projet, la butée réglable (22) sur le dispositif de montage (19) permettant le respect de la dimension de profondeur (h) d'insertion déterminée par le projet.
